# DEMANDE DE BREVET EUROPEEN

(11) **EP 1 879 309 A1**
(43) Date de publication de la demande: **16.01.2008**
(21) Numéro de dépôt: 07111727.9
(22) Date de dépôt: 04.07.2007
(51) Int. Cl.: H04B 10/08, H04Q 11/00

(54) **Procédé et dispositif de surveillance des chemins optiques de connexion pour un réseau optique transparent**

(30) Priorité: 11.07.2006 FR 0652904
(71) Demandeur: Alcatel Lucent, 75008 Paris (FR)
(72) Inventeur: Peloso, Pierre, 91460, MARCOUSSIS (FR); Le Meur, Gaëlle, 91460, MARCOUSSIS (FR)
(74) Mandataire: Thibaud, Jean-Baptiste

(57) **Abrégé**

Dispositif de surveillance des chemins optiques de connexion comportant des moyens d'analyse multi-canal (93) disposés au niveau d'un élément du réseau (90) pour détecter les signatures de points de transit portées par un signal optique à multiplexage en longueurs d'onde transitant dans ledit élément du réseau, lesdits moyens d'analyse multi-canal étant aptes à rechercher un état anormal affectant ledit signal optique à multiplexage en longueurs d'onde à partir des signatures de points de transit détectées, des moyens de séparation optique pour séparer un sous-ensemble de longueurs d'onde dudit signal optique à multiplexage en longueurs d'onde, et des moyens d'analyse de canal séparé (98, 96) aptes à rechercher une faute affectant ledit sous-ensemble de longueurs d'onde séparé.

## Description

L'invention concerne les réseaux optiques transparents, et plus précisément le suivi des chemins optiques de connexion établis au sein de tels réseaux, via leurs noeuds de commutation.

On entend ici par « chemin optique de connexion » un chemin ou trajet physique emprunté par un ou plusieurs signaux optiques émis à une ou plusieurs longueurs d'onde données au sein d'un réseau optique transparent. Un tel chemin physique est défini par des portions de lignes optiques constituées généralement de fibres optiques et raccordant des paires de noeuds de commutation transparents.

Par ailleurs, on entend ici par « réseau optique transparent » un réseau dans lequel les signaux demeurent constamment dans le domaine optique.

En outre, on entend ici par « noeud de commutation transparent » un équipement de réseau comportant au moins un dispositif de commutation optique, de type transparent, chargé d'aiguiller des canaux de longueurs d'onde multiplexés ou à multiplexer en provenance de lignes optiques amont et destinés à des lignes optiques aval.

De plus, on entend ici par « multiplex » un ensemble de canaux de longueurs d'onde différentes empruntant conjointement un même média. Des canaux, associés à des longueurs d'onde différentes et empruntant conjointement un même média, peuvent donc être multiplexés afin de constituer un multiplex. Un chemin optique de connexion peut donc être associé à un canal de longueur d'onde ou à un multiplex de longueurs d'onde, notamment un multiplex de longueurs d'onde formant une même connexion, c'est-à-dire traité comme une seule entité logique. Pour faciliter l'ingénierie de trafic, plusieurs canaux de longueur d'onde ayant des sources et/ou des destinations différentes peuvent être agrégés sur une portion commune de leurs trajets physiques respectifs afin d'être traités comme une seule connexion sur cette portion commune.

Comme le sait l'homme de l'art, il est particulièrement important pour les opérateurs de savoir si les chemins optiques de connexion qui sont établis entre les noeuds de commutation de leurs réseaux optiques transparents sont en adéquation avec les états de programmation respectifs des dispositifs de commutation optique de ces noeuds de commutation. Toute inadéquation résulte d'un problème, soit de programmation, soit de fonctionnement d'un noeud de commutation, soit encore dans une portion de ligne optique, auquel il faut remédier.

Afin de vérifier l'adéquation précitée, on met en oeuvre dans les réseaux des procédés dits de « suivi et vérification des chemins optiques de connexion ». Cette vérification permet ainsi de vérifier la connectivité d'un chemin optique de connexion, c'est-à-dire si le canal relie la bonne source au bon destinataire. Dans un réseau optique non transparent, cette mise en oeuvre est relativement aisée du fait que l'on effectue au sein des noeuds de commutation des conversions de signaux de type optique/électrique/optique qui permettent, par l'ajout de trafic de contrôle, de vérifier que chaque récepteur est bien mis en relation avec la source correspondante au niveau de chaque lien.

Tel n'est pas le cas dans un réseau optique transparent du fait de l'absence de conversion de signaux de type optique/électrique/optique (les dispositifs de commutation optique opèrent en effet au niveau de la couche physique, et plus précisément sur les longueurs d'onde des canaux).

Pour remédier à cet inconvénient, plusieurs solutions ont été proposées.

Une première solution, qui est l'extrapolation de ce qui se passe dans un réseau non transparent, consiste à injecter un trafic de contrôle dans les lignes optiques afin de tester l'accord entre la source et la destination des différents chemins optiques de connexion. Cette solution présente l'inconvénient majeur de consommer de la bande passante ainsi que de ne délivrer aucune information sur la localisation d'une possible erreur, ce qui rend la réparation plus difficile.

Une deuxième solution consiste à associer à chaque source de signal (et donc à chaque canal) utilisée dans le réseau au moins une fréquence qui est appliquée au canal par sur-modulation. En analysant une longueur d'onde en un endroit choisi du réseau on peut déterminer la ou les fréquences de sur-modulation appliquées et donc connaître le canal présent grâce à des informations fournies par le gestionnaire du réseau. Ces informations sont au moins la correspondance entre les fréquences de sur-modulation et les canaux, qui permet de déterminer le chemin emprunté par ce canal. Cette solution est notamment proposée par la société Tropics sous le nom commercial « Wavelength Tracker® ».

Cette deuxième solution nécessite l'utilisation d'autant de modules de traitement, par exemple de type atténuateur optique variable (ou VOA pour « Variable Optical Attenuator »), qu'il y a de canaux utilisés dans le réseau. Les atténuateurs optiques variables sont placés en amont de chaque port d'insertion d'un dispositif de commutation optique de manière à effectuer la sur-modulation des canaux à insérer dans le trafic. Cela entraîne des coûts importants et pose des problèmes lorsque l'on veut transformer un réseau d'une certaine taille en un réseau d'une taille plus grande (c'est-à-dire le passage à l'échelle (ou « scalability »)) du fait des nouvelles fréquences de sur-modulation qui doivent être utilisées pour être appliquées aux nouveaux canaux.

US 2003/0099010 propose un système de surveillance des performance d'un réseau optique à multiplexage en longueur d'onde, conforme au préambule de la revendication 1, dans lequel chaque noeud comporte un encodeur pour moduler les signaux optiques quittant le noeud à l'aide d'une signature de la fibre optique dans laquelle ces signaux optiques entrent. Ce système mesure la puissance du signal associé à chaque signature afin détecter la possibilité d'une rupture de fibre, d'une défaillance d'amplificateur ou d'une défaillance de transpondeur. Pour évaluer quels canaux transitent dans quelles fibres, il est enseigné de surveiller conjointement la présence des signatures de fibres et des signatures de canaux à différents points du réseau.

EP 1 347 591 propose un système de détection de fautes pour un réseau optique à multiplexage en longueur d'onde, dans lequel des dispositifs de vérification détectent la présence de signatures attribuées de manière unique à des éléments de réseau. Le système traite l'information détectée par les dispositifs de vérification en relation avec une image correcte du réseau, pour détecter la défaillance d'un lien ou d'un élément de réseau. L'image correcte du réseau est créée et mise à jour par un gestionnaire du réseau.

L'invention a pour but de proposer des procédés et dispositifs permettant de détecter d'autres types d'erreurs dans un réseau optique transparent, notamment des erreurs de routage affectant des canaux de longueur d'onde, des erreurs de configuration au niveau du plan de gestion du réseau et des erreurs pouvant avoir des causes matérielles ou humaines. Un autre but de l'invention est de proposer des procédés et dispositifs permettant de détecter des erreurs dans un réseau optique transparent de manière rapide et économique.

Pour cela, selon un premier objet, l'invention fournit un procédé de surveillance des chemins optiques de connexion, pour un réseau optique transparent dans lequel chacun d'une pluralité de noeuds de commutation est respectivement apte à faire passer de manière transparente un signal optique depuis un lien en amont dudit noeud de commutation vers un lien en aval dudit noeud de commutation et à marquer ledit signal optique d'une signature de noeud comportant une information associée de manière unique audit noeud de commutation, ledit procédé comportant l'étape consistant à détecter les signatures de noeuds dont est marqué un signal optique transitant en un point dudit réseau, caractérisé par les étapes consistant à :
déterminer un nombre de sauts à partir desdites signatures de noeuds détectées,
comparer ledit nombre de sauts à un seuil prédéterminé, de manière à détecter une erreur de routage relative audit signal optique lorsque ledit seuil est dépassé.

Grâce à un tel procédé, on peut utiliser les signatures de noeuds pour obtenir des fonctionnalités analogues à celles que fournit le paramètre temps de vie (TTL) d'un paquet IP (Internet Protocol). Par exemple, ce procédé permet de détecter qu'un signal optique ne trouve pas son chemin dans le réseau ou qu'un signal optique risque d'atteindre un secteur de réseau auquel il est étranger et/ou pourrait ainsi courir le risque d'être délivré à un client auquel il n'est pas destiné. Cette détection permet de prendre des mesures correctrices locales au niveau du noeud de commutation et/ou d'alerter un système de gestion du réseau pour prendre des mesures correctrices en d'autres points du réseau. Par exemple, le nombre de sauts peut être déterminé en tant que nombre de signatures de noeud distinctes dont est marqué le signal optique ou en tant que nombre de noeuds de commutation distincts représentés par les signatures détectées.

Le seuil prédéterminé peut être fixé en fonction de la topologie du réseau, par exemple en fonction d'un diamètre du réseau en nombres de sauts. En général, la topologie d'un réseau optique n'évolue pas de manière fréquente, de sorte que ce seuil n'aura pas besoin d'être mis à jour fréquemment. La détection d'erreur est donc essentiellement locale et ne nécessite pas d'interaction intensive avec un gestionnaire de réseau possédant un connaissance de l'ensemble du réseau.

Ce procédé peut être mis en oeuvre en tout point du réseau. De préférence, on détecte les signatures portées par un signal optique reçu par un noeud de commutation dudit réseau.

Selon un mode de réalisation particulier, le procédé comprend l'étape consistant à terminer ou extraire du réseau ledit signal optique pour lequel ladite erreur de routage est détectée. Par exemple, cette extraction ou terminaison peut être faite au niveau d'un noeud de commutation voisin du point du réseau où la détection est effectuée ou au niveau d'un noeud de commutation où la détection elle-même est effectuée.

De préférence, on détecte les signatures portées par un signal optique comportant une seule longueur d'onde. Dans un mode de réalisation alternatif, on détecte les signatures portées par un signal optique comportant plusieurs longueurs d'onde qui appartiennent à une même connexion, c'est-à-dire qui sont commutées ensemble dans le réseau et qui empruntent donc un chemin commun à travers les mêmes ports et les mêmes liens. Par exemple, les longueurs d'onde de ce mode de réalisation appartiennent à une bande de longueurs d'onde commutée intégralement dans le réseau.

Dans tous les cas, on peut prévoir l'étape consistant à séparer un ou plusieurs canaux d'un multiplex de longueurs d'onde transitant dans le réseau pour obtenir le signal optique dont les signatures doivent être détectées.

L'invention fournit également un dispositif de surveillance des chemins optiques de connexion pour un réseau optique transparent, comportant :
des moyens d'analyse aptes à détecter des signatures de noeuds portées par un signal optique transitant en un point dudit réseau, chaque signature de noeud comportant une information associée de manière unique à un noeud de commutation dudit réseau,
caractérisé par le fait que lesdits moyens d'analyse incluent des moyens de calcul aptes à déterminer un nombre de sauts à partir desdites signatures de noeuds détectées et des moyens de détection d'erreur aptes à comparer ledit nombre de sauts à un seuil prédéterminé, de manière à détecter une erreur de routage relative audit signal optique lorsque ledit seuil est dépassé.

De préférence, les moyens de calcul déterminent le nombre de sauts en tant que nombre de signatures de noeuds distinctes détectées. Ce mode de réalisation convient par exemple pour un réseau dans lequel une seule signature est attribuée par noeud.

Selon un mode de réalisation particulier, le dispositif comporte un annuaire de signatures identifiant une pluralité de signatures de noeuds et le noeud de commutation respectif associé à chacune d'elles, lesdits moyens de calcul étant aptes à coopérer avec ledit annuaire de signatures pour déterminer ledit nombre de sauts. De cette manière, les moyens de calcul peuvent identifier les signatures de noeuds parmi d'autres signatures et/ou prendre en compte des spécificités des noeuds, par exemple le fait qu'un noeud marque de plusieurs signatures un signal optique qui le traverse. Par annuaire de signatures, on entend ici des informations de référence qui identifient les associations entre les signatures de noeuds et les noeuds. Ces informations sont mises à la disposition des moyens de calcul, par exemple sous une forme de table ou autre.

Avantageusement, le dispositif comporte des moyens d'alerte aptes à produire un signal d'alerte relatif audit signal optique pour lequel ladite erreur de routage est détectée. Par exemple, le signal d'alerte peut être produit à destination d'un système de gestion du réseau. Un système de gestion de réseau s'entend ici d'un système centralisé connecté aux noeuds de commutation du réseau, ou d'un système distribué, comportant par exemple plusieurs modules de gestion distribués dans plusieurs noeuds de commutation du réseau.

Selon un mode de réalisation particulier, le dispositif est associé à un noeud de commutation dans lequel ledit signal optique est reçu, ledit dispositif comportant des moyens de commande aptes à commander un dispositif de commutation dudit noeud de commutation pour provoquer la terminaison ou l'extraction dudit signal optique pour lequel ladite erreur de routage est détectée.

Avantageusement, les moyens d'analyse comprennent un module de filtrage optique pour séparer un ou plusieurs canaux d'un multiplex de longueurs d'onde transitant dans le réseau et pour fournir ledit canal ou lesdits canaux de longueurs d'onde, notamment plusieurs canaux appartenant à une même connexion, en tant que signal optique dont les signatures doivent être détectées. Par exemple, le module de filtrage optique comporte un démultiplexeur de canaux, un démultiplexeur de bandes, ou un filtre accordable.

Selon un deuxième objet, l'invention fournit un dispositif de surveillance des chemins optiques de connexion pour un noeud de commutation d'un réseau optique transparent, ledit noeud de commutation comprenant des moyens de traitement aptes à marquer un signal optique d'au moins une signature de noeud comportant une information associée de manière unique audit noeud de commutation, au moins une sortie optique apte à transmettre ledit signal optique marqué dans ledit réseau, au moins une entrée optique apte à être couplée à une ligne optique amont, et des moyens de commutation couplant au moins une dite entrée à au moins une dite sortie, ledit dispositif de surveillance des chemins optiques de connexion comportant des moyens d'analyse aptes à analyser un signal optique reçu par ledit noeud de commutation en amont desdits moyens de traitement pour détecter une ou plusieurs signatures dont est marqué ledit signal optique, caractérisé par le fait que :
lesdits moyens d'analyse sont aptes à rechercher ladite au moins une signature de noeud associée audit noeud de commutation, pour détecter une erreur de routage lorsque ledit signal optique reçu est marqué d'une signature de noeud associée audit noeud de commutation en amont desdits moyens de traitement.

Lorsqu'il n'y a qu'une seule signature de noeud associée au noeud, les moyens d'analyse sont agencés pour détecter si cette signature est présente dans le signal optique. Si plusieurs signatures de noeuds sont associées au noeud, les moyens d'analyse sont de préférence agencés pour détecter si l'une quelconque de ces signatures est présente. Ainsi, on peut détecter la présence d'un signal optique qui passe deux fois par le noeud de commutation en suivant une route en boucle dans le réseau. Cette détection permet de prendre des mesures correctrices locales au niveau du noeud de commutation et/ou d'alerter un système de gestion du réseau pour prendre des mesures correctrices en d'autres points du réseau. Ici encore, la détection d'erreur est essentiellement locale et ne nécessite aucune interaction préalable avec un gestionnaire de réseau possédant un connaissance de l'ensemble du réseau.

Avantageusement, le dispositif comporte des moyens d'alerte aptes à produire un signal d'alerte relatif audit signal optique pour lequel ladite erreur de routage est détectée. Par exemple, le signal d'alerte peut être produit à destination d'un système de gestion du réseau. Un système de gestion de réseau s'entend ici d'un système centralisé connecté aux noeuds de commutation du réseau, ou d'un système distribué, comportant par exemple plusieurs modules de gestion distribués dans plusieurs noeuds de commutation du réseau.

Selon un mode de réalisation particulier, le dispositif est associé à un noeud de commutation dans lequel ledit signal optique est reçu, ledit dispositif comportant des moyens de commande aptes à commander un dispositif de commutation dudit noeud de commutation pour provoquer la terminaison ou l'extraction dudit signal optique pour lequel ladite erreur de routage est détectée.

De préférence, les moyens d'analyse sont agencés pour rechercher ladite au moins une signature de noeud sur un signal optique comportant une seule longueur d'onde.

Selon un autre mode de réalisation, les moyens d'analyse sont agencés pour rechercher ladite au moins une signature de noeud sur un multiplex de longueurs d'onde.

Avantageusement, les moyens d'analyse comportent un module d'analyse apte à fonctionner sélectivement dans un mode de fonctionnement mono-canal dans lequel ladite au moins une signature de noeud est recherchée sur un signal optique comportant une seule longueur d'onde et dans un mode de fonctionnement multi-canal dans lequel ladite au moins une signature de noeud est recherchée sur un multiplex de longueurs d'onde.

De préférence, les moyens d'analyse coopèrent avec un moyen de stockage, par exemple une mémoire, dans lequel est stockée la signature ou la pluralité de signatures associée au noeud de commutation.

Selon l'invention, les dispositifs de surveillance des chemins optiques de connexion ci-dessus et ci-dessous peuvent être combinés avec un dispositif de commutation optique, pour un noeud de commutation d'un réseau optique transparent, comprenant, d'une première part, au moins un port d'entrée destiné à être couplé à une ligne optique amont dédiée au transport de canaux multiplexés, d'une deuxième part, au moins une voie de sortie (port de sortie destiné à être couplé à une ligne optique aval dédiée au transport de canaux multiplexés ou port d'extraction), et d'une troisième part, des moyens de commutation couplant chaque port d'entrée à chaque voie de sortie.

Ce dispositif de commutation optique se caractérise par le fait qu'il comprend en outre des moyens de traitement chargés d'adjoindre aux canaux qui parviennent sur chaque port d'entrée d'un noeud de commutation une signature comportant une première information représentative au moins de ce noeud de commutation.

On entend ici par « signature » toute modification appliquée à un canal ou multiplex et permettant de marquer le passage de ce canal ou des canaux composant ce multiplex en un endroit donné.

Le dispositif de commutation optique peut comporter d'autres caractéristiques qui peuvent être prises séparément ou en combinaison, et notamment :
- ses moyens de traitement peuvent être chargés d'adjoindre à un ou chaque canal (ou un ou chaque canal d'un ou de chaque multiplex) une signature comportant une première information représentative de leur propre noeud de commutation et une seconde information représentative du port d'entrée qui a reçu le canal ;
- ses moyens de traitement peuvent être chargés d'appliquer une même sur-modulation d'amplitude à une fréquence choisie (formant une première information), représentative de leur propre noeud de commutation, à un ou chaque canal (ou un ou chaque canal d'un ou de chaque multiplex) reçu par chaque port d'entrée ;
- ses moyens de traitement peuvent par exemple être chargés d'appliquer aux premières informations (éventuellement aux sur-modulations), qui sont appliquées aux canaux reçus par des ports d'entrée (et d'insertion) différents, des sur-modulations d'amplitude à des fréquences différentes ou des déphasages différents (formant des secondes informations) représentatifs respectivement de ces ports d'entrée (ou d'insertion) ; les ports peuvent par exemple être identifiés par un code FSK en modulant la fréquence de la surmodulation ;
- ses moyens de traitement peuvent comporter des modules de traitement en nombre égal au moins au nombre des ports d'entrée et chargés chacun d'adjoindre la signature aux canaux reçus par le port d'entrée correspondant,
- ses moyens de traitement peuvent comporter au moins un module de traitement additionnel chargé d'adjoindre la signature aux canaux introduits par un port d'insertion couplé à un module d'insertion ;
- ses moyens de traitement peuvent comporter des modules de traitement additionnels en nombre égal au nombre des ports d'insertion et chargés chacun d'adjoindre la signature aux canaux introduits par le port d'insertion correspondant ;
- chaque module de traitement peut par exemple être agencé sous la forme d'un atténuateur optique variable commandé électriquement ;
- il peut également comprendre des moyens d'analyse chargés d'analyser les canaux qui sont délivrés par une ou certaines au moins des voies de sortie, afin de déterminer la signature qui leur a été adjointe par les moyens de traitement de leur propre noeud de commutation ;
   ➢ ces moyens d'analyse peuvent être chargés de déterminer un état physique du dispositif de commutation à partir de la détermination des canaux délivrés par une voie de sortie et de la signature qui a été adjointe à chacun desdits canaux par lesdits moyens de traitement du dispositif de commutation, de vérifier une correspondance entre ledit état physique du dispositif de commutation et un état de programmation définissant les canaux qui doivent être délivrés sur ladite voie de sortie et les ports d'entrée sur lesquels lesdits canaux doivent parvenir audit dispositif de commutation, et à générer un message d'alarme en cas de non correspondance ;
   ➢ ces moyens d'analyse peuvent être chargés d'analyser les canaux qui sont délivrés par des voies de sortie, afin de déterminer chaque signature qui leur a été adjointe par les moyens de traitement de chaque noeud de commutation par lequel ils ont transité, y compris le leur ;
   ➢ ces moyens d'analyse peuvent être chargés d'analyser une seconde information adjointe à une première information d'un ou de chaque canal par les moyens de traitement de chaque noeud de commutation par lequel il a transité, y compris le leur ;
   ➢ ces moyens d'analyse peuvent par exemple comporter des modules d'analyse en nombre égal au nombre de voies de sortie à analyser et chargés chacun d'analyser un ou plusieurs canaux reçus par la voie de sortie correspondante ;
   ➢ en variante, on peut prévoir un commutateur comprenant des entrées couplées respectivement aux voies de sortie à analyser et au moins une sortie, et des moyens d'analyse comportant un module d'analyse mutualisé comprenant une entrée couplée à la sortie du commutateur et chargé d'analyser un ou plusieurs canaux reçus par l'une des voies de sortie à analyser, sélectionnée par le commutateur ;
   ➢ chaque module d'analyse peut par exemple comprendre un sous-module de filtrage optique chargé de séparer un ou plusieurs canaux délivrés par la voie de sortie correspondante, ainsi qu'au moins un sous-module de conversion optique/électrique chargé de convertir chaque canal en signal électrique, et un sous-module d'analyse électrique chargé d'identifier chaque signature adjointe à chaque canal séparé ;
- ses moyens de traitement peuvent être chargés d'appliquer une signature à tous les canaux d'un multiplex simultanément ;
- ses moyens de commutation peuvent comprendre, d'une première part, un premier étage comportant N modules de diffusion munis chacun d'une première entrée, couplée à l'un des ports d'entrée, et M premières sorties, propres chacune à délivrer au moins l'un des canaux multiplexés reçus par la première entrée, d'une deuxième part, un deuxième étage comportant M modules de fusion comprenant chacun N deuxièmes entrées, propres à recevoir chacune au moins un canal d'une longueur d'onde, et une deuxième sortie couplée à un port de sortie constituant l'une des voies de sortie et propre à délivrer au moins un canal reçu sur l'une des deuxièmes entrées, et d'une troisième part, un troisième étage comportant au moins NxM liens optiques couplant au moins les premières sorties aux deuxièmes entrées de sorte que chacun des N modules de diffusion soit couplé à chacun des M modules de fusion ;
   ➢ ces modules de diffusion peuvent par exemple être choisis parmi les coupleurs optiques à une entrée et M sorties et les modules de sélection de longueurs d'onde, par exemple de type WSS ;
   ➢ ces modules de fusion peuvent par exemple être choisis parmi les coupleurs optiques à N entrées et une sortie et les modules de sélection de longueurs d'onde, par exemple de type WSS. On notera que soit les modules de fusion sont de type non sélectif et les modules de diffusion de type sélectif, soit les modules de fusion sont de type sélectif et les modules de diffusion de type non sélectif ou sélectif.

Selon un troisième objet, l'invention fournit un procédé de surveillance des chemins optiques de connexion, pour un réseau optique transparent, caractérisé par les étapes consistant à :
au niveau d'au moins un élément du réseau, marquer un signal optique transitant dans ledit élément du réseau d'une signature de point de transit associée de manière unique audit élément du réseau,
détecter les signatures de points de transit portées par un multiplex de longueurs d'onde transitant dans un élément du réseau,
rechercher un état anormal affectant ledit multiplex de longueurs d'onde à partir des signatures de points de transit détectées,
en réponse à la détection de l'état anormal affectant ledit multiplex de longueurs d'onde, séparer un sous-ensemble de longueurs d'onde dudit multiplex de longueurs d'onde et rechercher une faute de connexion affectant ledit sous-ensemble de longueurs d'onde.

Un élément de réseau désigne ici n'importe quel élément matériel, simple ou complexe, ponctuel ou étendu, possédant une localisation définie dans le réseau et apte à faire passer de manière transparente ou à émettre un signal optique dans le réseau, par exemple un noeud de commutation, un port d'entrée, un port de sortie, un port d'insertion, un port d'extraction, un lien optique tel qu'un guide d'onde ou une fibre optique, la source d'un signal optique monochromatique, la source d'un signal optique multiplexé en longueur d'onde, etc.

Dans le cas des signatures de points de transit associées de manière unique à des éléments du réseau respectifs, une même signature peut être portée par plusieurs canaux de longueur d'onde, par exemple lorsque les signatures de points de transit sont marquées sur des multiplex. Comme indiqué ci-dessus, un démultiplexage préalable des longueurs d'ondes est généralement nécessaire pour identifier une anomalie de routage affectant un ou plusieurs canaux de longueur d'onde, par exemple à l'aide des signatures de points de transit portées par ce canal ou groupe de canaux. Or, la détection simultanée des signatures portées par chaque canal de longueur d'onde individuellement nécessiterait un grand nombre de dispositifs de détection, i.e. autant que les canaux, ce qui présenterait un coût matériel et un encombrement désavantageux. Alternativement, la détection successive des signatures portées par chaque canal de longueur d'onde par un unique dispositif de détection accordable nécessite un temps important. Une idée à la base de cet objet de l'invention est qu'il existe des cas où une anomalie de routage est détectable, au moins partiellement, à l'aide des signatures de points de transit portées par le multiplex de longueurs d'onde dans son ensemble. Ainsi, sans avoir besoin d'un grand nombre de dispositifs de détection de signatures, on peut quant même obtenir rapidement l'indication d'une anomalie de routage affectant au moins certains canaux du multiplex spectral dans ces cas, afin par exemple de produire rapidement une alerte, ou de préparer ou d'exécuter des actions correctrices, par exemple l'activation d'un chemin de protection ou d'un composant de protection pour le signal optique considéré. Ces mesures d'alerte, de préparation ou de protection peuvent être conduites pendant qu'on effectue une caractérisation plus fine de l'anomalie, nécessitant le traitement successif de plusieurs parties du spectre de canaux. Un sous-ensemble de longueurs d'onde peut à chaque fois comporter un seul canal ou plusieurs canaux de longueur d'onde, par exemple une bande spectrale. De plus, la nature de l'état anormal détecté peut être utilisée comme une indication du type de faute devant être recherchée pour le sous-ensemble de longueurs d'onde.

Selon un premier mode de réalisation, les signatures de points de transit portées par ledit multiplex de longueurs d'onde sont détectées à plusieurs instants successifs, la recherche dudit état anormal incluant l'étape consistant à détecter une variation des signatures de points de transit détectées au cours du temps. Un avantage de ce mode de réalisation est de pouvoir déclencher une alerte rapidement en cas de variation des chemins de connexion surveillés.

De préférence, ledit état anormal inclut une variation des signatures de points de transit décorrélée de la programmation des chemins optiques de connexion dans le réseau, la recherche dudit état anormal incluant l'étape consistant à rechercher dans la programmation des chemins optiques de connexion du réseau une instruction de reconfiguration correspondant à la variation détectée. Par exemple, dans ce cas, la faute recherchée pour un ou chaque sous-ensemble de longueurs d'onde peut être de même nature que l'état anormal susmentionné, par exemple une variation des signatures du sous-ensemble de longueurs d'onde ou l'apparition ou la disparition d'un canal de longueur d'onde au niveau du point de mesure. La faute recherchée peut aussi être la présence d'un état de commutation en désaccord avec la programmation du réseau. Inversement, lorsqu'on détecte une instruction de reconfiguration correspondant à la variation des signatures, l'état anormal ou la faute correspondante n'est pas détecté. Dans ce cas, le procédé pourrait être utilisé pour confirmer l'exécution correcte dans le plan de données d'une instruction de reconfiguration reçue au niveau du plan de contrôle du réseau et pour émettre un signal de confirmation à destination d'un système de gestion du réseau le cas échéant.

Selon un deuxième mode de réalisation, la détection des signatures de points de transit est effectuée pour un signal optique guidé en direction de moyens de traitement aptes à marquer ledit signal optique d'au moins une signature de point de transit attribuée auxdits moyens de traitement, ledit état anormal incluant la présence, sur ledit signal optique en amont desdits moyens de traitement, d'une dite signature de point de transit attribuée auxdits moyens de traitement. Ce mode de réalisation permet de détecter la présence d'un chemin de connexion bouclé. Dans ce cas, la faute recherchée pour un ou chaque sous-ensemble de longueurs d'onde peut être de même nature que l'état anormal susmentionné, à savoir la présence d'un chemin de connexion bouclé pour ledit ensemble de longueur d'onde.

Avantageusement, le procédé comporte les étapes consistant à sélectionner un autre sous-ensemble de longueurs d'onde dans ledit multiplex de longueurs d'onde et rechercher une faute affectant ledit autre sous-ensemble de longueurs d'onde. Par exemple, les étapes de sélection de sous-ensemble de longueurs d'onde et de recherche de faute sont répétées dans le temps de manière à être appliquées à tous les canaux de longueur d'onde dudit multiplex de longueurs d'onde. En variante, ces étapes peuvent être répétées jusqu'à ce qu'une faute causant ledit état anormal soit détectée en relation avec un sous-ensemble de longueurs d'onde.

Avantageusement, le procédé comporte l'étape consistant à détecter les signatures de points de transit portées par ledit ou chaque sous-ensemble de longueurs d'onde séparé, la recherche de faute étant effectuée à partir des signatures de points de transit détectées sur ledit sous-ensemble de longueurs d'onde.

De préférence, une signature de point de transit est marquée par sur-modulation d'amplitude du signal optique, la détection des signatures de points de transit incluant l'étape consistant à mesurer un spectre des sur-modulations d'amplitude portées par le signal optique. Ce spectre peut être mesuré pour un ensemble prédéterminé de fréquences, par exemple une plage de fréquence prédéterminée, choisi en fonction des fréquences utilisées dans le réseau. Lorsque d'autres types de signatures sont employés, les moyens d'analyse sont adaptés de manière correspondante.

Avantageusement, le procédé comprend l'étape consistant à, en réponse à la détection de l'état anormal affectant ledit multiplex de longueurs d'onde, émettre un signal d'alerte à destination d'un système de gestion du réseau.

L'invention selon ce troisième objet propose aussi un dispositif de surveillance des chemins optiques de connexion, pour un réseau optique transparent comportant des moyens de traitement disposés au niveau d'au moins un élément du réseau et aptes à marquer un signal optique transitant dans ledit élément du réseau d'une signature de point de transit associée de manière unique audit élément du réseau, caractérisé par le fait que ledit dispositif comporte :
des moyens d'analyse multi-canal disposés au niveau d'un élément du réseau pour détecter les signatures de points de transit portées par un multiplex de longueurs d'onde transitant dans ledit élément du réseau, lesdits moyens d'analyse multi-canal étant aptes à rechercher un état anormal affectant ledit multiplex de longueurs d'onde à partir des signatures de points de transit détectées,
des moyens de séparation optique pour séparer un sous-ensemble de longueurs d'onde dudit multiplex de longueurs d'onde,
des moyens d'analyse de canal séparé aptes à rechercher une faute affectant ledit sous-ensemble de longueurs d'onde séparé.

Avantageusement, des moyens de déclenchement sont aptes à déclencher lesdits moyens d'analyse de canal séparé pour effectuer ladite recherche de faute en réponse à la détection de l'état anormal affectant ledit multiplex de longueurs d'onde.

Selon un mode de réalisation particulier, les moyens d'analyse multi-canal comportent des moyens de comparaison temporelle pour détecter une variation des signatures de points de transit détectées au cours du temps.

De préférence, des moyens d'analyse d'instructions sont aptes à rechercher dans la programmation des chemins optiques de connexion du réseau une instruction de reconfiguration correspondant à une variation des signatures de points de transit détectée par lesdits moyens de comparaison temporelle.

Selon un autre mode de réalisation particulier, les moyens d'analyse multi-canal et lesdits moyens d'analyse de canal séparé sont disposés de manière à détecter des signatures sur un signal optique se propageant vers des moyens de traitement aptes à marquer ledit signal optique d'au moins une signature de point de transit attribuée auxdits moyens de traitement, lesdits moyens d'analyse multi-canal et lesdits moyens d'analyse de canal séparé étant aptes à rechercher ladite au moins une signature de point de transit attribuée auxdits moyens de traitement.

L'invention propose également un noeud de commutation, pour un réseau (D)WDM, équipé d'au moins un dispositif de surveillance des chemins optiques de connexion présenté ci-avant. Un tel noeud de commutation peut par exemple se présenter sous la forme d'un brasseur optique transparent ou d'un multiplexeur optique reconfigurable à insertion/extraction.

D'autres caractéristiques et avantages de l'invention apparaîtront à l'examen de la description détaillée ci-après, et des dessins annexés, sur lesquels :
- la figure 1 illustre de façon schématique et fonctionnelle un premier exemple de réalisation d'un dispositif de commutation optique dans lequel peuvent être implantés des dispositifs de surveillance selon différents modes de réalisation, et
- la figure 2 illustre de façon schématique et fonctionnelle un second exemple de réalisation d'un dispositif de commutation optique dans lequel peuvent être implantés des dispositifs de surveillance des chemins optiques,
- La figure 3 illustre de façon schématique et fonctionnelle un réseau optique transparent, dans lequel sont implantés des dispositif de surveillance des chemins optiques,
- La figure 4 illustre de façon schématique et fonctionnelle un noeud de commutation optique du réseau de la figure 3,
- La figure 5 illustre de façon schématique et fonctionnelle un module d'analyse du dispositif de surveillance de la figure 4,
- La figure 6 est un diagramme d'étapes illustrant un premier procédé de surveillance mis en oeuvre par le dispositif de surveillance de la figure 4,
- La figure 7 est un diagramme d'étapes illustrant un deuxième procédé de surveillance mis en oeuvre par le dispositif de surveillance de la figure 4.
- La figure 8 illustre de façon schématique et fonctionnelle un noeud de commutation optique équipé d'un dispositif de surveillance selon un autre mode de réalisation,
- Les figures 9 et 10 représentent des spectres de signatures mesurés par le dispositif de surveillance de la figure 8.

Les dessins annexés pourront non seulement servir à compléter l'invention, mais aussi contribuer à sa définition, le cas échéant.

Dans ce qui suit, on considère à titre d'exemple non limitatif que les noeuds de commutation sont des brasseurs optiques transparents (ou OXCs pour « Optical Cross-Connects »), éventuellement à fonction d'insertion et/ou extraction, ou des multiplexeurs optiques à insertion/extraction (ou OADMs pour « Optical Add/Drop Multiplexers »). Plus généralement, un moyen de commutation désigne ici un moyen capable de sélectivement laisser passer ou ne pas laisser passer entre une entrée et une sortie un signal optique ayant une ou plusieurs longueurs d'onde choisies.

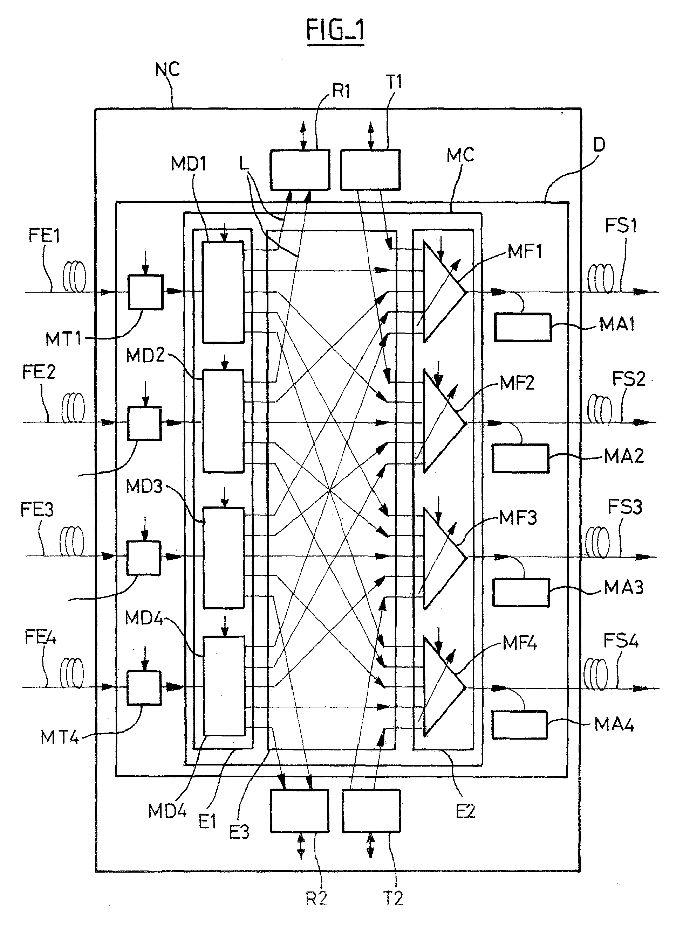

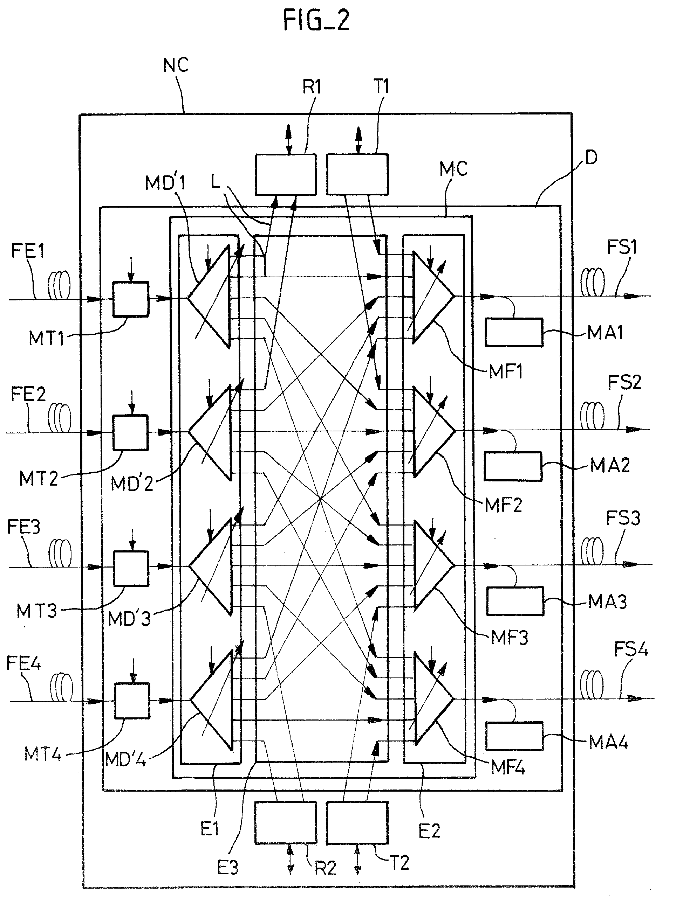

Les figures 1 et 2 représentent un exemple de réalisation d'un noeud de commutation NC apte à faire passer de manière transparente un signal optique depuis un lien en amont dudit noeud de commutation vers un lien en aval dudit noeud de commutation et à marquer ledit signal optique d'une signature de noeud comportant une information associée de manière unique au noeud de commutation NC.

Le noeud de commutation NC inclut un dispositif de commutation D, qui comporte tout d'abord N ports d'entrée couplés respectivement à des lignes optiques d'entrée FEi (i = 1 à N), comme par exemple des fibres optiques, dans lesquelles « circulent » des canaux multiplexés, également appelés multiplex spectral de signaux optiques ou multiplex de longueurs d'onde. Dans les exemples illustrés sur les figures 1 et 2, l'indice i prend des valeurs comprises entre 1 et 4, du fait que N est égal à 4 (à titre illustratif). Mais, cet indice i n'est pas limité à ces valeurs qui sont fixées par le nombre N de ports d'entrée du dispositif de commutation D. Il peut en effet prendre n'importe quelle valeur comprise entre 1 et N, avec N supérieur ou égal à un (N ≥ 1).

Par exemple chaque fibre optique d'entrée FEi est capable de transporter R canaux optiques (R>0).

Le dispositif de commutation D comporte également M ports de sortie couplés respectivement à des lignes optiques de sortie FSj (j = 1 à M), comme par exemple des fibres optiques, dans lesquelles « circulent » des canaux multiplexés, également appelés multiplex spectral de signaux optiques. Dans les exemples illustrés sur les figures 1 et 2, l'indice j prend des valeurs comprises entre 1 et 4, du fait que M est égal à 4 (à titre illustratif). Mais, cet indice j n'est pas limité à ces valeurs qui sont fixées par le nombre M de ports de sortie du dispositif de commutation D. Il peut en effet prendre n'importe quelle valeur comprise entre 1 et M, avec M supérieur ou égal à un (M ≥ 1).

Il est important de noter que les M ports de sortie constituent M voies de sortie. Mais, comme on le verra plus loin le dispositif peut comporter une ou plusieurs autres voies de sortie définissant chacune un port d'extraction. Par conséquent, on entend ici par voie de sortie aussi bien un port de sortie, couplé à une ligne optique de sortie FSj, qu'un port d'extraction.

Le dispositif de commutation D comporte également un module de commutation MC qui peut être fonctionnellement décomposé en des premier E1, deuxième E2 et troisième E3 étages. N'importe quel type de module de commutation MC peut être envisagé, et non pas seulement celui qui va être décrit ci-après en référence aux figures 1 et 2.

Le premier étage E1 (illustré sur les figures 1 et 2) comporte N modules de diffusion MDi (i = 1 à N) comprenant chacun au moins une première entrée et M premières sorties. Comme indiqué ci-avant, dans les exemples illustrés sur les figures 1 et 2, N et M sont égaux à quatre (N = 4, M = 4), mais N comme M peuvent prendre n'importe quelle valeur supérieure ou égale à un (N ≥ 1, M ≥ 1).

Chaque première entrée est destinée à être couplée à un port d'entrée du dispositif de commutation D et donc à une ligne optique d'entrée FEi.

Chaque module de diffusion MDi est chargé d'aiguiller des canaux optiques multiplexés qu'il reçoit sur son entrée (couplée à une ligne optique d'entrée FEi) en fonction de leurs longueurs d'onde respectives vers une ou plusieurs de ses M premières sorties. En d'autres termes, un module de diffusion MDi assure une fonction de « routage interne » qui lui permet de délivrer sur chacune de ses M premières sorties un ou plusieurs canaux optiques (voire même tous) d'un multiplex qu'il a reçu sur son unique entrée.

Dans les exemples illustrés sur les figures 1 et 2, chaque module de diffusion MDi comprend une première sortie d'extraction qui est couplée à un port d'extraction (ou voie de sortie) d'un module d'extraction d'un ou plusieurs canaux R1 ou R2 du noeud NC. Dans une variante, les modules d'extraction R1 et R2 pourraient faire partie du dispositif de commutation D. Par ailleurs, sur les figures 1 et 2 on a représenté deux modules d'extraction séparés, mais ils pourraient être regroupés en un unique module. Cette première sortie d'extraction permet de récupérer au niveau du noeud NC les signaux qui sont contenus dans un ou plusieurs canaux transportés par l'une quelconque des lignes d'entrée FEi, en vue d'un traitement local et/ou d'une transmission à au moins un terminal raccordé au noeud NC.

Dans le premier exemple illustré sur la figure 1, les modules de diffusion MDi sont de type non sélectif. Il s'agit par exemple de coupleurs optiques (ou « optical splitters »), chargés de délivrer sur chacune de ses premières sorties l'ensemble des canaux optiques reçu sur sa première entrée.

Dans une variante, les modules de diffusion pourraient être de type sélectif. C'est notamment le cas du second exemple de réalisation illustré sur la figure 2. Dans ce cas, ils constituent par exemple des modules de sélection de longueurs d'onde de type WSS (MD'i), tels que ceux présentés dans la partie introductive. Ces modules de sélection de longueurs d'onde MD'i sont réglables en fonction d'une commande, et peuvent délivrer sur chacune de leurs M premières sorties soit un canal optique sélectionné parmi les canaux optiques reçus sur leur première entrée, soit un multiplex constitué d'un ensemble de canaux optiques sélectionnés parmi les canaux optiques du multiplex reçu sur leur première entrée, en fonction d'une commande spécifique. Il est important de noter que chaque canal reçu sur la première entrée ne peut être distribué que sur une unique première sortie. La sélection des canaux se fait en interne au moyen de filtres intégrés.

Les modules WSS sont notamment décrits dans le document de T. Ducellier et al. « The MWS 1x4 : A High Performance Wavelength Switching Building Block », Conférence ECOC'2002, Copenhague, 9 septembre 2002, 2.3.1.

Les modules de sélection de longueurs d'onde de type WSS sont avantageux du fait, notamment, qu'ils induisent de faibles pertes d'insertion comparées à celles induites par de simples coupleurs, lorsque leur nombre de sorties (M) est supérieur à 4.

Le deuxième étage E2 (illustré sur les figures 1 et 2) comporte M modules de fusion MFj comprenant chacun N deuxièmes entrées et au moins une deuxième sortie qui est couplée à l'un des M ports de sortie du dispositif de commutation D, et donc à l'une des M lignes optiques de sortie FSj.

Chaque module de fusion MFj assure une fonction d'aiguillage interne (éventuellement programmable) permettant de fournir sur au moins une deuxième sortie soit un canal optique sélectionné parmi les canaux optiques reçus sur ses N deuxièmes entrées, soit un multiplex constitué d'un ensemble de canaux optiques sélectionnés parmi les canaux optiques reçus sur ses N deuxièmes entrées.

Dans les exemples illustrés sur les figures 1 et 2, chaque module de fusion MFj comprend une deuxième entrée d'insertion qui est couplée à un module d'insertion d'un ou plusieurs canaux T1 ou T2 du noeud NC. Dans une variante, les modules d'insertion T1 et T2 pourraient faire partie du dispositif de commutation D. Par ailleurs, sur les figures 1 et 2 on a représenté deux modules d'insertion séparés, mais ils pourraient être regroupés en un unique module. Cette deuxième entrée d'insertion permet d'alimenter le module de fusion MFj concerné avec un ou plusieurs canaux de manière à le(s) multiplexer, éventuellement, avec d'autres canaux reçus par l'une au moins de ses autres deuxièmes entrées.

Dans les exemples illustrés sur les figures 1 et 2, les modules de fusion MFj sont de type sélectif. Il s'agit par exemple de modules de sélection de longueurs d'onde de type WSS, tels que ceux présentés ci-avant et dans la partie introductive. Dans ce cas, ils sont réglables en fonction d'une commande, et peuvent délivrer sur leur unique deuxième sortie soit un canal optique sélectionné parmi les canaux optiques reçus sur leurs N deuxièmes entrées, soit un multiplex constitué d'un ensemble de canaux optiques sélectionnés parmi les canaux optiques reçus sur leurs N deuxièmes entrées, en fonction d'une commande spécifique.

Mais, dans une variante, ils pourraient être de type non sélectif. Dans ce cas, ils constituent par exemple des coupleurs optiques (ou « optical couplers »), chargés de délivrer sur au moins une deuxième sortie un multiplex constitué de l'ensemble des canaux optiques reçus sur leurs N deuxièmes entrées.

D'une manière générale, les modules de fusion peuvent être de type non sélectif ou de type sélectif et les modules de diffusion peuvent être de type non sélectif ou de type sélectif.

Le troisième étage E3 (illustré sur les figures 1 et 2) comporte au moins NxM liens optiques L couplant chacun l'une des M premières sorties de l'un des N modules de diffusion MDi (ou MD'i) à l'une des N deuxièmes entrées de l'un des M modules de fusion MFj. Comme cela est illustré sur les figures 1 et 2, le troisième étage E3 peut également comporter des liens optiques L couplant soit l'une des premières sorties de l'un des N modules de diffusion MDi (ou MD'i) à un port d'extraction (ou voie de sortie) de l'un des modules d'extraction T1, T2, soit l'un des modules d'insertion R1, R2 à la deuxième entrée (d'insertion) de l'un au moins des M modules de fusion MFj.

Il est important de noter qu'un module de diffusion MDi (ou MD'i) peut éventuellement comporter plusieurs premières sorties d'extraction, tout comme un module de fusion MFj peut éventuellement comporter plusieurs deuxièmes entrées d'insertion.

Dans ce qui précède, on a décrit un premier exemple de réalisation de module de commutation MC (en référence à la figure 1) dans lequel les modules de diffusion MDi sont tous des coupleurs optiques (optical splitters) et les modules de fusion MFj sont tous des modules de sélection de longueurs d'onde (par exemple de type WSS), et un second exemple de réalisation de module de commutation MC (en référence à la figure 2) dans lequel les modules de diffusion MD'i et les modules de fusion MFj sont tous des modules de sélection de longueurs d'onde (par exemple de type WSS). Mais, on peut également envisager au moins un troisième exemple de réalisation dans lequel les modules de diffusion sont tous des modules de sélection de longueurs d'onde (par exemple de type WSS) et les modules de fusion sont tous des coupleurs optiques (optical couplers).

L'invention n'est pas limitée aux exemples de noeuds de commutation décrits ci-avant, notamment en référence aux figures 1 et 2. Ainsi, selon un autre mode de réalisation, le module de commutation MC peut comprendre un premier étage E1 agencé sous la forme d'un ou plusieurs démultiplexeur(s) (éventuellement adapté à l'extraction de canaux), un deuxième étage E2 agencé sous la forme d'un ou plusieurs multiplexeur(s) (éventuellement adapté à l'insertion de canaux), et un troisième étage E3 agencé sous la forme d'une matrice de commutation reliant les premières sorties du (ou des) démultiplexeur(s) aux secondes entrées du (ou des) multiplexeur(s).

Le dispositif de commutation D comprend également des moyens de traitement MTi implantés au niveau de chacun des ports d'entrée de son noeud de commutation NC et chargés d'adjoindre à chaque canal (ou à chacun des canaux d'un multiplex) parvenant sur chaque port d'entrée (et/ou d'insertion) une signature représentative au moins du noeud de commutation NC dans lequel ils sont implantés.

Ainsi, chaque canal qui emprunte un chemin optique de connexion se voit adjoindre dans chaque noeud NC qu'il « traverse » (ou qui l'insère dans le trafic) une signature comportant une première information représentative de ce noeud NC. En d'autres termes, chaque canal porte la trace de son passage dans chaque noeud du chemin optique de connexion qu'il emprunte. Il est alors possible, comme on le verra plus loin, soit de déterminer en chaque noeud chaque signature adjointe à chaque canal, afin de reconstituer le chemin qu'il a emprunté (mode d'analyse locale), soit de déterminer au niveau du « dernier » noeud d'un chemin optique de connexion emprunté par un canal chaque signature qui lui a été adjointe par chaque noeud de ce chemin optique de connexion.

Tout type de signature susceptible de représenter un noeud NC peut être adjoint à un canal par les moyens de traitement MTi de ce noeud NC, dès lors qu'il n'implique pas une conversion optique/électrique/optique.

Il est rappelé que l'on entend ici par « signature » toute modification appliquée à un canal ou un multiplex et permettant de marquer le passage de ce canal ou des canaux qui composent ce multiplex en un endroit donné.

Préférentiellement, les modules de traitement MTi sont agencés pour appliquer une signature à tous les canaux d'un multiplex simultanément.

Par exemple, les moyens de traitement MTi d'un noeud NC peuvent appliquer à chaque canal reçu par chaque port d'entrée, une même sur-modulation de fréquence f_{NC}, représentative de leur noeud NC et formant une première information. Dans ce cas, chaque noeud du réseau doit disposer de sa propre fréquence de sur-modulation (également appelée « pilot tone »).

Il est préférable que chaque fréquence de sur-modulation satisfasse à au moins deux règles.

Il faut tout d'abord que chaque fréquence de sur-modulation soit suffisamment grande pour être transparente aux amplificateurs installés sur les lignes optiques FEi et FSj du réseau. Cela est plus particulièrement le cas lorsque les amplificateurs sont de type EDFA (« Erbium Doped Fibre Amplifier » - amplificateur à fibre dopée erbium). En effet, ce type d'amplificateur lisse le signal qu'il amplifie lorsque les modulations ont une fréquence inférieure à un premier seuil. Par conséquent, si l'on veut conserver une sur-modulation lors de la traversée d'un EDFA il faut que sa fréquence de sur-modulation soit supérieure au premier seuil. Typiquement, il est préférable que chaque fréquence de sur-modulation soit supérieure à environ 10 kHz.

Il faut ensuite que chaque fréquence de sur-modulation soit suffisamment petite pour être en dehors de l'étendue spectrale des données représentées par les signaux des canaux. En effet, lorsqu'une fréquence de sur-modulation dépasse un second seuil, cela peut perturber le signal car cela peut correspondre à des fréquences représentatives d'une suite d'un grand nombre de bits (0 ou 1) identiques. Par conséquent, si l'on ne veut pas perturber un signal il faut que la fréquence de sur-modulation soit inférieure au second seuil. Typiquement, il est préférable que chaque fréquence de sur-modulation soit inférieure à environ 1 MHz.

Il est important de noter que la signature qui est adjointe à chaque canal, par les moyens de traitement MTi d'un noeud NC, peut être représentative non seulement de ce noeud NC, mais également du port d'entrée qui a reçu le canal. Tout type de seconde information susceptible de représenter un port d'entrée d'un noeud NC (et de le différencier par rapport aux autres ports de ce noeud NC) peut être adjoint à un canal, en complément de la première information, par les moyens de traitement MTi de ce noeud NC, dès lors qu'il n'implique pas une conversion optique/électrique/optique.

Par exemple, les moyens de traitement MTi d'un noeud NC peuvent appliquer à chaque première information, adjointe à chaque canal reçu par un port d'entrée, une seconde information représentative de ce port d'entrée.

Par exemple, cette seconde information peut se présenter sous la forme d'un déphasage dans la sur-modulation appliquée en tant que première information. Dans ce cas, les phases des premières informations, adjointes aux canaux reçus sur des ports d'entrée différents, diffèrent les unes des autres. Dans les exemples illustrés sur les figures 1 et 2, les moyens de traitement MTi peuvent par exemple appliquer un déphasage nul sur le premier port d'entrée couplé à la première fibre d'entrée FE1, un déphasage de π sur le deuxième port d'entrée couplé à la deuxième fibre d'entrée FE2, un déphasage de -π/2 sur le troisième port d'entrée couplé à la troisième fibre d'entrée FE3, et un déphasage de +π/2 sur le quatrième port d'entrée couplé à la quatrième fibre d'entrée FE4.

La combinaison d'une sur-modulation à une fréquence f_{NC} (représentative d'un noeud NC donné) et, par exemple, d'un déphasage (représentatif de l'un des N ports d'entrée d'un noeud NC) forme une signature qui permet d'indiquer sans ambiguïté par quel port d'entrée d'un noeud a transité un canal. Du fait de cette combinaison, il n'est pas nécessaire de prévoir des secondes informations (par exemple des déphasages différents) pour des ports d'entrée de noeuds différents. Un même multiplet de N secondes informations (par exemple N déphasages) différentes peut donc être utilisé dans chaque noeud (bien entendu si ces noeuds comportent tous le même nombre de ports d'entrée).

Ce mode de réalisation peut nécessiter la définition au sein du réseau de références de parties locales de signatures utiles pour déterminer le port d'entrée au niveau d'un noeud NC donné.

Au lieu d'appliquer aux canaux qui parviennent sur un port d'entrée donné une seconde information sous la forme d'un déphasage choisi des premières informations, on peut par exemple leur appliquer une information identifiant le port sous la forme d'une sur-modulation selon une fréquence ou une combinaison de bits propre à ce port d'entrée. En d'autres termes, selon une première variante, un noeud NC se voit attribuer un lot de fréquences de surmodulation associées de manière unique ce noeud, une fréquence respective du lot étant attribuée à chaque port d'entrée du noeud. Selon une deuxième variante, la surmodulation appliquée au niveau des ports d'entrée d'un noeud présente une fréquence particulière attribuée à ce noeud et porte de surcroît un code binaire respectif permettant de différencier les ports d'entrée. Ce code peut être appliqué en modulant la fréquence de la surmodulation autour de la fréquence attribuée au noeud.

Afin d'adjoindre chaque signature au niveau de chaque port d'entrée, les moyens de traitement MTi peuvent par exemple se présenter sous une forme modulaire, comme illustré sur les figures 1 et 2. Dans ce cas, chaque port d'entrée est pourvu d'un module de traitement MTi chargé d'adjoindre aux canaux qu'il reçoit une signature représentative du noeud NC qu'il équipe.

Par exemple, chaque module de traitement MTi peut être un atténuateur optique variable (ou VOA) commandé électriquement. Dans ce cas, l'application à un canal d'une première information (comme par exemple une sur-modulation) se fait par atténuation de sa puissance selon la fréquence associée au noeud NC comprenant le port d'entrée qui l'a reçu. Un tel module de traitement MTi (VOA) est également capable d'appliquer à chaque première information une seconde information, par exemple sous la forme d'un déphasage choisi, destinée à différencier ce port d'entrée des autres ports d'entrée du même noeud NC.

D'autres types de module de traitement MTi que le VOA peuvent être utilisés pour adjoindre une signature aux canaux. Ainsi, on peut par exemple utiliser des modulateurs ou des modules acousto-optiques.

Comme cela est illustré sur les figures 1 et 2, et comme évoqué précédemment, un noeud de commutation NC peut également comporter des moyens d'analyse MAi couplés à certaines au moins des voies de sortie de son dispositif de commutation D, afin de déterminer, au moins, la signature qui a été adjointe à chaque canal reçu par les moyens de traitement MTi implantés sur les ports d'entrée de ce même dispositif de commutation D.

Préférentiellement, et comme illustré, chaque port de sortie fait l'objet d'une analyse par les moyens d'analyse. Mais, on peut également envisager que les ports d'extraction fassent l'objet d'une analyse par les moyens d'analyse. Cela permet notamment de faire une analyse de bout-en-bout (ou « end-to-end ») dans le dernier noeud d'un réseau. On peut également envisager que seuls les ports d'extraction fassent l'objet d'une analyse par les moyens d'analyse.

Préférentiellement, les moyens d'analyse MAi sont capables de déterminer chaque signature qui a été adjointe à chaque canal par les moyens de traitement MTi de chaque noeud de commutation par lequel ce canal a transité, y compris le leur. Cela est notamment nécessaire lorsque seuls les ports d'extraction que comprend un dispositif de commutation D font l'objet d'une analyse par les moyens d'analyse MAi, ce qui est par exemple le cas dans un réseau en anneau.

Les moyens d'analyse peuvent être soit de type modulaire, soit de type mutualisé.

Dans le cas mutualisé, un unique module d'analyse sert à analyser les signatures adjointes aux canaux délivrés par plusieurs voies de sortie (ports de sortie et/ou ports d'extraction). Dans ce cas, chaque port de sortie à analyser est pourvu d'un séparateur optique en Y couplé, d'une part, à la fibre de sortie FSj correspondante, et d'autre part, à l'une des entrées d'un commutateur chargé de sélectionner l'un des ports de sortie à analyser et de délivrer sur une sortie les canaux reçus par ce port de sortie à analyser pour alimenter l'entrée du module d'analyse mutualisé.

Dans le cas modulaire, chaque voie de sortie devant faire l'objet d'une analyse est équipée d'un module d'analyse qui lui est propre. C'est notamment le cas des ports de sortie dans les exemples illustrés sur les figures 1 et 2. Plus précisément, afin de déterminer au niveau d'une voie de sortie chaque signature adjointe à chaque canal, cette voie de sortie est pourvue d'un séparateur optique en Y couplé, d'une part, à la fibre de sortie FSj correspondante, et d'autre part, au module d'analyse MAi correspondant, et chargé de prélever une petite partie de la puissance des canaux délivrés par ce port de sortie pour alimenter ce module d'analyse MAi. Le séparateur optique en Y est par exemple de type 95% / 5%.

La méthode de détermination d'une signature adjointe à un canal dépend du (ou des) type(s) de technique utilisé(s) pour générer et adjoindre cette signature. Quelle que soit la méthode utilisée, le module d'analyse MAi doit tout d'abord séparer spectralement (ou filtrer) les canaux à analyser, qui sont délivrés sous la forme d'un multiplex par une voie de sortie (ici un port de sortie), au moyen d'un sous-module de filtrage optique. Puis, ce module d'analyse MAi doit convertir le canal en signal électrique au moyen d'un sous-module de conversion optique/electrique. La bande passante de ce sous-module est préférentiellement appropriée aux fréquences contenues dans les signatures. Puis ce module d'analyse MAi doit analyser ce signal électrique, au moyen d'un sous-module d'analyse électrique, afin d'identifier les signatures, c'est-à-dire dans un premier temps éventuellement la ou les fréquences des sur-modulations constituant les premières informations, et dans un deuxième temps identifier la phase (ou les sur-modulations) constituant la deuxième information propre au noeud (ou les deuxièmes informations des noeuds précédents).

Le sous-module de filtrage optique peut par exemple être réalisé au moyen d'un filtre accordable.

Le sous-module de conversion optique/électrique peut par exemple se présenter sous la forme d'une photodiode, placée en sortie du sous-module de filtrage optique et chargée de transformer les canaux optiques en signaux électriques.

Les sous-modules de filtrage optique et de conversion optique/électrique peuvent éventuellement être rassemblés en un seul module appelé OCM (pour « Optical Channel Monitor ») qui peut-être réalisé soit en cascadant un filtre accordable et une photodiode soit sous la forme d'un réseau de diffraction séparant les longueurs d'onde vers une barrette de photodiodes.

Le sous-module d'analyse électrique peut par exemple se présenter sous la forme d'un sous-module de détection synchrone (« lock-in détection ») chargé de déterminer la fréquence de sur-modulation des signaux électriques et l'éventuel déphasage de cette sur-modulation.

Bien entendu, le mode de réalisation des sous-modules d'analyse électrique varie en fonction de la nature des premières et secondes informations.

Grâce à ce type d'analyse des canaux, on peut déterminer en un noeud NC chaque signature adjointe à chaque canal, et donc déterminer au moins chaque noeud par lequel il a transité (lorsque l'on connaît la fréquence de sur-modulation associée à chaque noeud), ainsi qu'éventuellement chaque port d'entrée utilisé dans chaque noeud de transit. Connaissant les ports d'entrée qui ont reçu les canaux, on peut en déduire les ports de sortie des noeuds dans lesquels ils ont transité et qui sont couplés à ces noeuds d'entrée. On peut ainsi reconstituer le chemin emprunté précédemment par chaque canal, en chaque lieu d'analyse.

On notera que certains au moins des ports d'insertion de canaux (sorties des modules d'insertion T1 et T2) peuvent être pourvus d'un module de traitement MTi (additionnels) du type de ceux décrits ci-avant. Lorsqu'ils ne sont pas pourvus de module de traitement MTi, les canaux qui sont insérés dans un noeud donné ne comportent aucune signature lorsqu'ils parviennent au niveau d'un port de sortie de ce noeud. Cette absence de signature sur des canaux constitue malgré tout une signature valable localement puisqu'elle signale qu'ils ont été insérés dans le noeud courant.

Par ailleurs, lorsque le plan de gestion signale aux noeuds les canaux qui doivent parvenir sur chacun de leurs ports d'entrée et les canaux qui doivent être délivrés sur chacun de leurs ports de sortie, les moyens d'analyse MAi peuvent vérifier si l'état physique de leur dispositif de commutation D correspond effectivement à son état logique. En cas de non-correspondance (ou d'inadéquation), les moyens d'analyse MAi en déduisent qu'il y a un problème, et ils peuvent par exemple générer un message d'alarme afin que soit mis en oeuvre un mécanisme de protection destiné à remédier au problème détecté.

Le noeud de commutation équipé des modules de traitement et d'analyse permet le suivi des chemins optiques de connexion établis dans un réseau optique transparent, en particulier dans un mode d'analyse locale (c'est-à-dire au moyen d'analyses effectuées dans le noeud de commutation du réseau), et aussi dans un mode d'analyse de bout en bout pour autant que les signatures sont appliquées de manière cumulative en différents points du réseau.

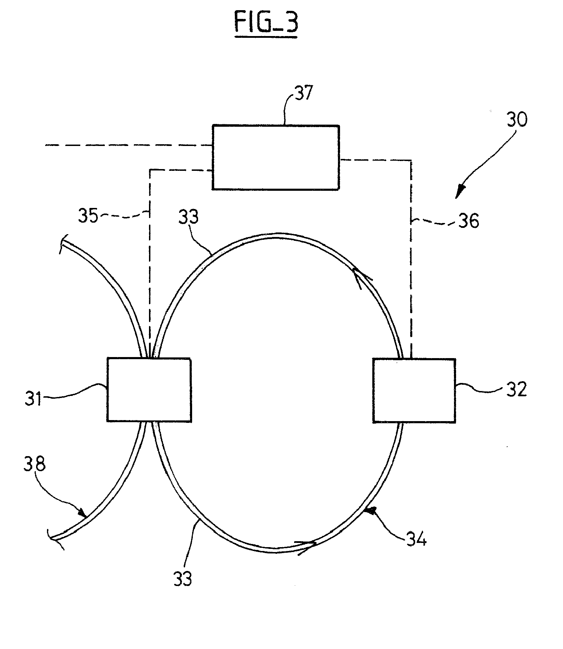

Sur la figure 3, on a représenté partiellement un réseau optique transparent à multiplexage en longueur d'onde 30, conçu pour la mise en oeuvre de différents procédés de surveillance du routage des canaux de longueur d'onde. Le réseau 30 formé à partir d'une pluralité de noeuds de commutation dont chacun est apte à marquer d'une signature de noeud respective les signaux optique qu'il commute entre ses ports d'entrée et ports de sortie. Le réseau 30 comporte ici un brasseur optique 31 et un multiplexeur optique reconfigurable à insertion/extraction 32 (ROADM) reliés par des fibres optiques 33 formant un anneau 34. Le brasseur optique 31, réalisé par exemple similairement à la figure 1 ou 2, relie l'anneau 34 à une autre portion de réseau 38 partiellement esquissée. La topologie représentée est purement illustrative. Les dispositifs de surveillance décrits ci-dessous peuvent être implantés dans des réseau de toute taille et de toute topologie.

Un ou plusieurs noeuds de commutation du réseau, ici les noeuds 31 et 32, sont équipés de dispositifs de surveillance des chemins optiques de connexion pour détecter des erreurs de routage. La figure 3 illustre des liaisons 35 et 36 entre chacun des noeuds 31 et 32 et un appareil de gestion de réseau centralisé 37. Ces liaisons permettent de transmettre des signaux d'alerte à l'appareil de gestion 37 lorsqu'un dispositif de surveillance d'un noeud détecte une erreur de routage affectant un signal optique. D'autres noeuds du réseau peuvent être similairement reliés à l'appareil de gestion 37.

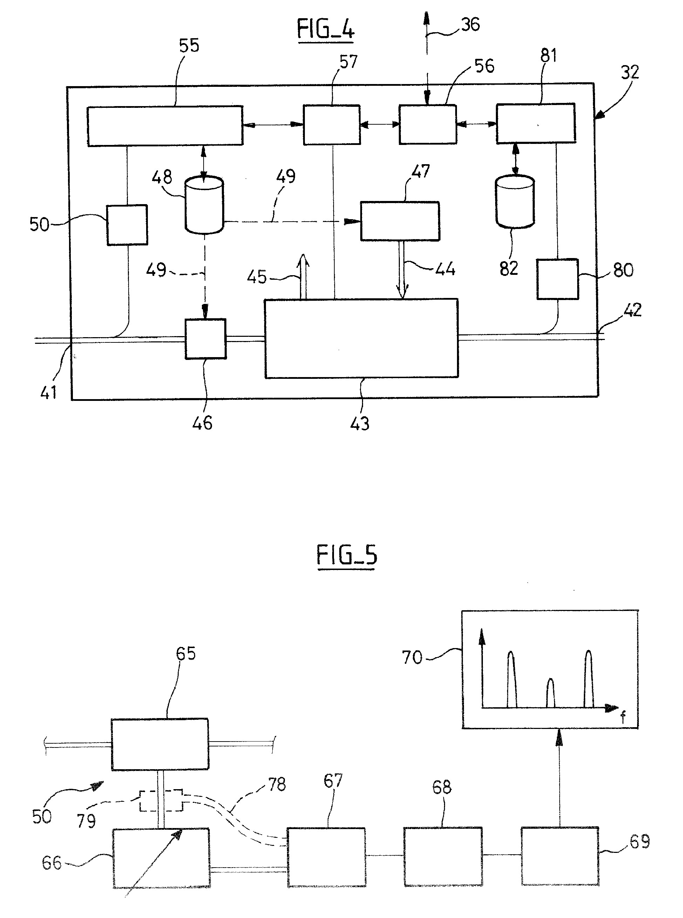

La figure 4 représente un exemple de réalisation du ROADM 32 équipé de dispositifs de surveillance destinés à détecter des erreurs de type chemin bouclé et des erreurs de type chemin égaré. Schématiquement, le ROADM 32 comporte un port d'entrée 41 relié à une fibre optique amont, un port de sortie 42 relié à une fibre optique aval et une matrice de commutation transparente 43 interposée entre les ports 41 et 42. La matrice de commutation 43 comporte un ou plusieurs ports d'insertion 44 pour pouvoir insérer un ou plusieurs canaux de longueur d'onde et un ou plusieurs ports d'extraction 45 pour pouvoir extraire un ou plusieurs canaux de longueur d'onde. Comme dans les brasseurs optiques des figures 1 et 2, un module de traitement 46 est disposé au niveau du port d'entrée de la matrice de commutation 43 pour appliquer une surmodulation d'amplitude aux signaux optiques entrants et un module de traitement 47 est disposé au niveau du port d'insertion 44 pour appliquer une surmodulation d'amplitude aux signaux optiques insérés. Ces sur-modulations sont appliquées avec une ou plusieurs fréquences attribuées de manière unique au ROADM 32, pour permettre de distinguer n'importe où dans le réseau les signaux optiques ayant traversé le ROADM 32. La ou les valeurs de fréquence devant être appliquées par les modules de traitement 46 et 47, et qui constituent ici la signature du ROADM 32, sont par exemple stockées dans une mémoire 48 à laquelle les modules de traitement peuvent accéder, comme illustré par les liaisons 49. De préférence, on prévoit aussi un accès à la mémoire 48 depuis l'appareil de gestion 37 pour permettre de configurer ou de mettre à jour les fréquences ou autres caractéristiques des signatures depuis l'appareil de gestion 37. En variante ou en combinaison, on peut prévoir de réaliser ces opérations depuis une interface homme-machine locale du noeud 32.

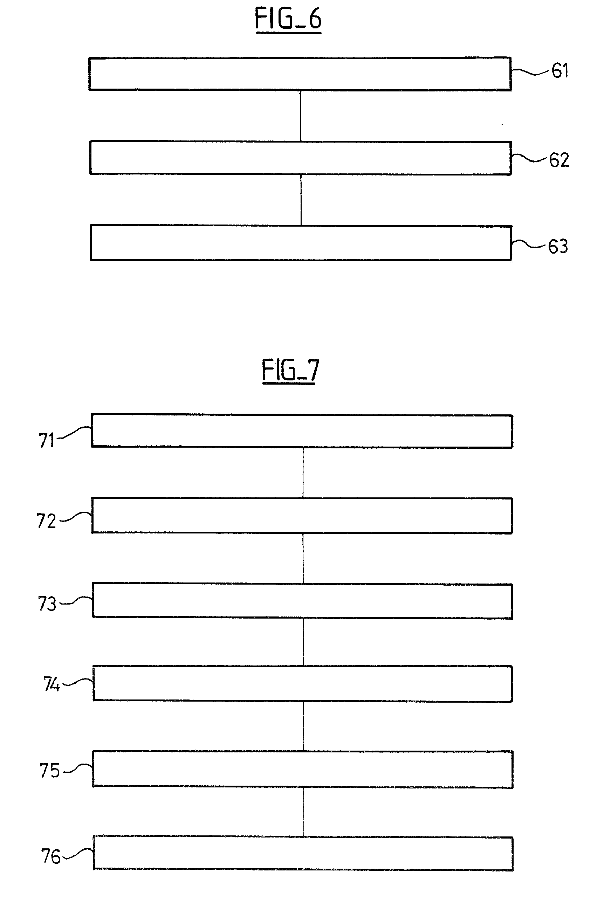

On décrit maintenant plus précisément un dispositif de surveillance chargé de détecter au niveau du ROADM 32 les chemins de connexion en boucle. Pour cela, un module d'analyse 50 est couplé à la ligne optique dans laquelle le ROADM 32 reçoit le signal optique venant de la fibre optique amont. Le fonctionnement du dispositif est illustré sur la figure 6. A l'étape 61, le module d'analyse 50 analyse le signal optique multiplexé en longueur d'onde ou bien canal par canal, afin de déterminer la signature ou les signatures de noeuds qu'il porte. La ou les signatures détectées sont communiquées à une unité de recherche 55. A l'étape 62, l'unité de recherche 55 compare la ou les signatures détectées à la signature ou aux signatures attribuées de manière unique au ROADM 32, pour déterminer si le signal optique analysé, pouvant être un multiplex ou un canal séparé, porte déjà une signature du ROADM 32 au niveau du port d'entrée 41. Lorsque c'est le cas, à l'étape 63, l'unité de recherche 55 détecte un chemin bouclé pour ce signal optique. En général, un chemin bouclé n'est pas souhaité dans un réseau. Un chemin bouclé peut résulter d'une défaillance dans le plan de contrôle, par exemple erreur de programmation, ou dans le plan de données du réseau, par exemple dysfonctionnement d'un composant de commutation. L'unité de recherche 55 peut alors déclencher une ou plusieurs des actions correctrices suivantes :
- Emission d'un signal d'alerte à destination de l'appareil de gestion 37 par une unité d'alerte 56,
- Commutation de la matrice de commutation 43 par une unité de commande 57, pour terminer ou extraire le signal optique.

Pour cela, le module d'analyse 50 peut être réalisé conformément au mode de réalisation de la figure 5. Dans ce mode de réalisation, le module d'analyse comporte un coupleur 65 apte à prélever une portion du signal optique entrant, par exemple 5%, un sous-module de filtrage optique 66, de préférence accordable, pour sélectionner un canal de longueur d'onde de ce signal optique, un sous-module de conversion optique/électronique 67 pour convertir le canal sélectionné en un signal électrique, un sous-module de filtrage et d'amplification 68 pour mettre en forme le signal électrique sur lequel les signatures de noeuds doivent être détectées, et un sous-module d'analyse spectrale 69 pour déterminer la ou les fréquences de sur-modulation présentes dans le canal converti. Le sous-module d'analyse spectrale 69 peut être réalisé avec un processeur de signal numérique. Par exemple, le résultat du traitement effectué par le module d'analyse 50 peut se présenter sous la forme d'un spectre de sur-modulation 70 donnant les valeurs de fréquence f pour lesquelles une sur-modulation est présente, et éventuellement une mesure de la puissance contenue dans chaque fréquence.

Dans une variante de réalisation, le sous-module de filtrage optique 66 est conçu pour sélectionner un multiplex de longueurs d'onde au sein du signal optique, par exemple une bande de longueurs d'onde ou un ensemble de longueurs d'onde appartenant à une même connexion.

Dans une autre variante de réalisation, le sous-module de filtrage optique 66 est supprimé, de sorte que les sur-modulations sont détectées sur l'ensemble du multiplex spectral. De cette façon, les signatures peuvent être obtenues assez rapidement, de sorte que la détection d'un chemin bouclé peut être plus rapide que dans le cas où l'on effectuerait la surveillance successivement canal par canal en réglant le sous-module de filtrage optique à chaque fois. Cependant, lorsque l'analyse d'un multiplex conduit à la détection d'un chemin bouclé, il peut être nécessaire d'obtenir une information plus précise afin de localiser l'origine du problème. Pour cela, il peut être souhaitable, après analyse du multiplex, de procéder à une analyse canal par canal pour identifier le canal qui suit un chemin bouclé et transmettre l'identité de ce canal à l'appareil de gestion de réseau 37. Pour pouvoir conduire ces deux analyses, on peut prévoir deux modules d'analyse distincts ou bien prévoir un module d'analyse dans lequel le sous-module de filtrage optique 66 est sélectivement rendu transparent ou sélectivement contourné. Cette dernière possibilité est esquissée sur la figure 5 où un lien optique 78 relie le coupleur 65 au sous-module de conversion 67 en contournant le module de filtrage 66 et un commutateur 79 fait sélectivement passer le signal optique venant du coupleur 65 vers le sous-module 66 ou vers le lien 78.

En variante, la détection de boucle peut être réalisée à l'aide d'un module d'analyse disposé en aval de la matrice de commutation 43, c'est-à-dire pour des signaux optiques sortant du ROADM 32. Dans ce cas, le module de traitement 46 appliquant les signatures correspondantes doit toujours être disposé en aval de ce module d'analyse.

Pour rechercher les signatures du noeud, l'unité de recherche 55 peut accéder à la mémoire 48. Les signatures recherchées peuvent inclure des signatures utilisées pour marquer les signaux optiques que le ROADM 32 insère et/ou des signatures utilisées pour marquer les signaux optiques transitant à travers le ROADM 32.

Si un canal n'est émis que par un noeud déterminé, une signature associée à ce canal peut aussi être traitée comme une signature du noeud correspondant. Dans un noeud émettant un canal de longueur d'onde marquée d'une signature de canal particulière, le dispositif de surveillance peut donc aussi effectuer la détection de boucle en se basant sur la détection de cette signature de canal.

On décrit maintenant plus précisément un dispositif de surveillance chargé de détecter au niveau du ROADM 32 les chemins de connexion susceptibles d'être égarés dans le réseau. Pour cela, un module d'analyse 80 est couplé à la ligne optique dans laquelle le ROADM 32 transmet le signal optique vers la fibre optique aval. Le fonctionnement du dispositif est illustré sur la figure 7. A l'étape 71, le module d'analyse 80 analyse le signal optique multiplexé en longueur d'onde ou bien canal par canal, afin de déterminer la signature ou les signatures de noeuds qu'il porte. L'analyse d'un multiplex est pertinente si ce multiplex suit une route unique dans le réseau. Le module d'analyse 80 peut être réalisé identiquement au module d'analyse 50. La ou les signatures détectées sont communiquées à une unité de calcul 81. A l'étape 72, l'unité de calcul 81 compte le nombre de sauts représentés par les signatures de noeuds détectées.

La manière de réaliser ce décompte dépend de la manière dont sont appliquées les signatures par les noeuds du réseau. Dans le cas d'un réseau où chaque noeud applique une sur-modulation à une fréquence distincte, il suffit de compter le nombre de fréquences de sur-modulation présentes dans le signal. Dans le cas où chaque signature de noeud consiste en un nombre fixé de fréquences, il suffit de compter le nombre de fréquences de sur-modulation présentes dans le signal et de diviser le total par le nombre fixé. Dans des cas plus complexes, par exemple si tous les noeuds n'appliquent pas un schéma de signature similaire, l'unité de calcul 81 peut coopérer avec un annuaire de signature 82 stocké dans une mémoire ou autre support d'enregistrement. L'annuaire de signature 82 contient par exemple un enregistrement de chaque signature de chaque noeud du réseau, qui permet à l'unité de calcul 81 de comparer les signatures détectées à ces enregistrements pour identifier les différentes signatures de noeud et les compter.

A l'étape 73, l'unité de calcul 81 compare le nombre de sauts représenté par les signatures à un seuil supérieur prédéterminé. Ce seuil supérieur est par exemple fixé lors de la configuration du dispositif de surveillance et enregistré dans l'unité de calcul 81.

Le seuil supérieur peut être fixé en fonction de la topologie du réseau. Par exemple, il est possible de déterminer un nombre maximal de sauts permettant de relier deux noeuds quelconques d'un réseau à Q noeuds. Pour cela, une procédure possible consiste à :
- calculer le chemin le plus court, en nombre de sauts, pour chacune des Q*(Q-1) connections point à point entre deux noeuds,
- identifier le nombre de saut maximal parmi tous ces chemins.
   Le seuil supérieur peut être pris égal à ce nombre maximal, éventuellement augmenté d'une marge de sécurité positive.

Un chemin dont le nombre de sauts dépasse ce nombre maximal n'est en général pas souhaité dans le réseau et peut donc être considéré égaré. Un chemin égaré peut résulter d'une défaillance dans la plan de contrôle du réseau, par exemple erreur de programmation ou décision de routage prise de manière incohérente avec une reconfiguration en cours dans le réseau, ou d'une défaillance dans le plan de données du réseau, par exemple dysfonctionnement d'un composant de commutation, ou encore d'une erreur humaine.

A l'étape 74, lorsque le nombre maximal est dépassé, l'unité de calcul 81 détecte un chemin égaré pour ce signal optique. L'unité de calcul 81 peut alors déclencher une ou plusieurs des actions correctrices suivantes :
- Etape 75 : émission d'un signal d'alerte à destination de l'appareil de gestion 37 par une unité d'alerte 56,
- Etape 76 : commutation de la matrice de commutation 43 par une unité de commande 57, pour terminer ou extraire le signal optique.

En variante, la détection d'un nombre de sauts excessif peut être réalisée à l'aide d'un module d'analyse disposé en amont de la matrice de commutation 43, c'est-à-dire pour des signaux optiques entrant dans le ROADM 32. Toutefois, une analyse au niveau des ports de sortie est préférée dans la mesure où elle évite de contrôler inutilement des canaux devant être extraits. Ce dispositif de surveillance peut aussi être implanté séparément de tout noeud de commutation.

La détection du nombre de sauts ou la détermination d'un chemin de connexion de bout en bout à partir des signatures de noeuds accumulées sur le signal optique suppose que les signatures des différents noeuds puissent être accumulées en préservant la détectabilité de chaque signature de noeud. Pour favoriser cette détectabilité, il est possible de choisir les signature de noeuds dans un ensemble de valeurs bien choisies. Par exemple, un ensemble de valeurs de fréquence réduisant les mélanges à quatre ondes peut être construit selon les principes énoncés par F. Foghieri et al. « Reduction of Four-Wave Mixing Crosstalk in WDM Systems Using Unequally Spaced Channels » IEEE Photonics Technology Letters, Vol. 6, pp754-756 (1994).

Pour améliorer la détection des signatures, il peut aussi être avantageux de prévoir un égaliseur de spectre en amont du module d'analyse pour égaliser la puissance dans les canaux de longueurs d'onde. De préférence, les sur-modulations d'amplitude sont appliquées avec une profondeur de modulation sensiblement uniforme dans tout le réseau, choisie par exemple entre 1 et 5 %. Ainsi, une égalisation des canaux de longueurs d'onde peut produire conjointement une égalisation des signatures, afin de faciliter le dénombrement des canaux portant une signature donnée en fonction de la puissance contenue dans cette fréquence de sur-modulation.

La manière de réaliser les dispositifs de surveillance dans un autre type de noeud de commutation optique, par exemple dans le brasseur optique 31, se déduit aisément de l'exemple donné en référence au ROADM 32. Par exemple, un module d'analyse respectif peut être affecté à chaque port ou un module d'analyse mutualisé peut être employé pour plusieurs ports, comme décrit en référence aux figures 1 et 2.

La surveillance des chemins de connexion bouclés et la surveillance des chemins de connexion égarés produisent des résultats complémentaires l'une de l'autre et sont donc mises en oeuvre conjointement de préférence. Certains modules ou composants des deux dispositifs de surveillance peuvent ainsi être mis en commun ou intégrés, par exemple un module d'analyse, une unité d'alerte ou un circuit programmable. Toutefois, chaque dispositif de surveillance peut aussi être implanté de manière indépendante de l'autre. Contrairement à d'autres systèmes de détection de fautes, ces deux dispositifs de surveillance font appel à des informations de référence relativement stables, à savoir le nombre de sauts maximal à travers le réseau et la ou les signatures attribuées au noeud. Une mise à jour de ces données de référence par le plan de contrôle du réseau devrait donc être rarement nécessaire.

La détection de boucle peut être mise en oeuvre selon les mêmes principes avec des signatures associées à d'autres points de transits que des noeuds de commutation.

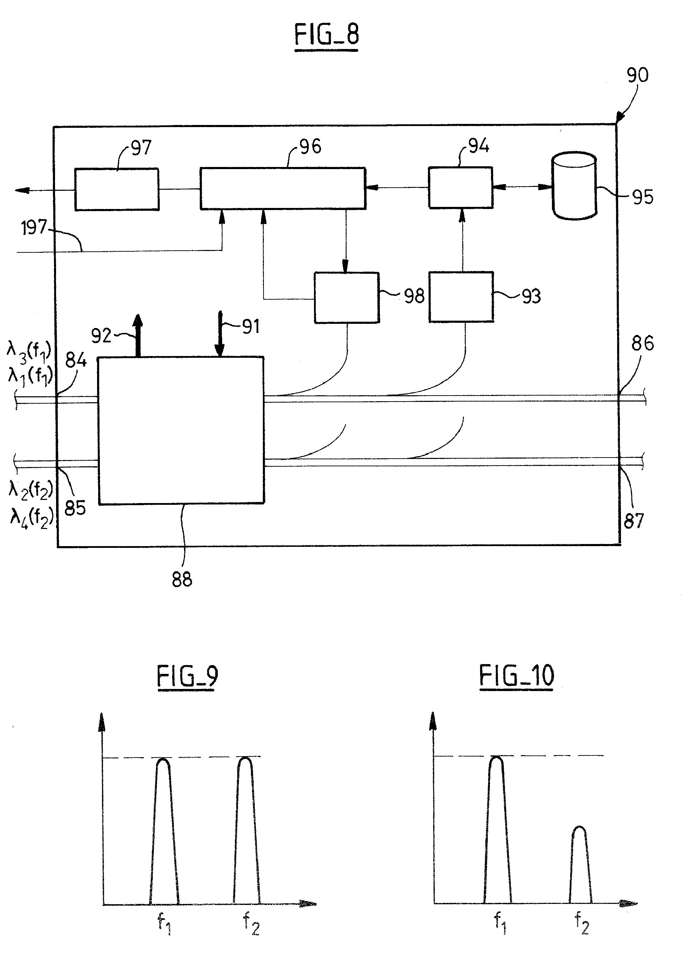

En référence à la figure 8, on décrit maintenant un exemple de réalisation d'un noeud de commutation transparent équipé d'un dispositif de surveillance du routage amélioré, qui permet de détecter un événement affectant le routage des canaux de longueur d'onde avant même qu'une analyse des signatures de chaque canal n'ait pu être effectuée. Ce noeud de commutation est destiné à être implanté dans un réseau optique transparent formé à partir d'un ou plusieurs éléments ayant chacun la capacité de marquer d'une signature respective les signaux optique qu'il fait transiter dans le réseau. Ces éléments peuvent être par exemple des noeuds de commutation auxquels sont associés des signatures de noeuds, comme dans le réseau décrit à la figure 3.

Pour l'illustration, on a représenté ici un noeud de commutation 90 ayant deux ports d'entrée 84, 85 et deux ports de sortie 86, 87 interconnectés par une matrice de commutation transparente 88 munies d'un ou plusieurs ports d'insertion 91 et d'un ou plusieurs ports d'extraction 92. A titre d'exemple, on décrit ci-dessous le dispositif de surveillance implanté dans le noeud 90 pour l'analyse des signatures sur la voie de sortie de la matrice de commutation 88 associée au port 86. Ce dispositif de surveillance comporte un premier module d'analyse 93 qui prélève une fraction du multiplex de longueurs d'onde transitant sur la voie de sortie, sans filtrage des canaux de longueur d'onde, et qui détecte toutes les signatures de noeuds portées par ce signal optique. Le module d'analyse 93 peut être réalisé de manière similaire à celui de la figure 5, mais sans le module de filtrage optique 66.

A intervalle régulier, le module d'analyse 93 envoie à un module de comparaison temporelle 94 le spectre des signatures détectées, par exemple pour toute la plage de fréquence des sur-modulations utilisées dans le réseau ou pour un sous ensemble continu ou discontinu de cette plage, incluant par exemple l'ensemble des fréquences de sur-modulation utilisées par le noeud 90, l'ensemble des fréquences de sur-modulation utilisées par les noeuds d'un secteur déterminé du réseau, l'ensemble des fréquences de sur-modulation utilisées par les noeuds directement en amont du noeud 90 ou l'ensemble des fréquences de sur-modulation utilisées par les noeuds voisins du noeud 90. Le module de comparaison temporelle 94 détecte les variations temporelles des signatures détectées en comparant le spectre reçu au pas de temps t avec le spectre reçu à un pas de temps précédent. Pour cela, le module de comparaison temporelle 94 conserve dans une mémoire 95 un enregistrement du spectre des signatures détectées à un ou plusieurs instants passés, par exemple au pas de temps t-1. Lorsqu'il détecte une variation de ce spectre, le module de comparaison temporelle 94 en avertit le contrôleur de noeud 96.

Les figures 9 et 10 illustrent, à titre d'exemple, une situation provoquant une variation des signatures sur la voie de sortie. A un instant t, le port 86 reçoit à travers la matrice de commutation 88 deux canaux marqués d'une sur-modulation à la fréquence f1 depuis le port 84, à savoir λ1 et λ3, et deux canaux marqués d'une sur-modulation à la fréquence f2 depuis le port 85, à savoir λ2 et λ4. La figure 9 représente le spectre de signatures correspondant mesuré par le module d'analyse 93. A un instant ultérieur, le canal λ4 ne parvient plus sur le port 86. La figure 10 représente le spectre de signatures correspondant mesuré par le module d'analyse 93. Dès que le module de comparaison temporelle 94 reçoit le spectre de la figure 10, il détecte qu'une variation est intervenue en relation avec la signature de fréquence f2, par exemple en calculant une différence entre les deux spectres et en comparant le résultat à un seuil prédéfini. Un avertissement peut en être donné très rapidement au contrôleur de noeud 96.

Les signatures f1 et f2 peuvent être par exemple appliquées dans un noeud précédent ou dans le noeud 90, par exemple à l'aide de modules de traitement disposés similairement aux modes de réalisation des figures 1 et 2. On notera qu'une variation du spectre de signatures serait aussi détectée dans la situation décrite ci-dessus si, au lieu des deux fréquences distinctes f1 et f2, les signatures portées par les signaux optiques sur les deux ports d'entrée 84 et 85 avaient la même fréquence avec un déphasage différent pour chaque port. En effet, l'intensité détectée à cette fréquence subirait une variation également dans ce cas.

Le dispositif de surveillance comporte aussi un deuxième module d'analyse 98 qui sert à détecter les signatures de noeuds portées respectivement par chaque canal de longueur d'onde du signal optique transitant sur la voie de sortie. Le module d'analyse 98 peut être réalisé de manière similaire à celui de la figure 5 ou encore, comme indiqué en référence à la figure 1, sous la forme d'un OCM. Selon un autre mode de réalisation, les deux modules d'analyse 93 et 98 peuvent partager certains composants, comme dans la variante de la figure 5 décrite plus haut.

De préférence, le module d'analyse 98 est déclenché par le contrôleur de noeud 96 en réponse à la détection d'une variation de spectre par le module de comparaison 94. Le fonctionnement du module d'analyse 98 est similaire à celui des modules MA des figures 1 et 2. Le signal optique est analysé canal par canal, afin de déterminer la signature ou les signatures qu'il porte. Pour cela, le module de filtrage optique est accordé successivement sur chaque canal de longueur d'onde ou, dans le cas d'un OCM, on sélectionne successivement le signal électrique de chaque photodiode, par exemple avec un commutateur électronique, pour détecter successivement les signatures correspondant à chaque canal séparé par le réseau de diffraction. Dans le cas d'un module d'analyse 98 mutualisé, le commutateur correspondant peut être commandé pour sélectionner la voie pour laquelle le modules d'analyse 93 a détecté une variation des signatures.

Le spectre de signature détecté pour chaque canal est passé au contrôleur de noeud 96 afin d'être comparé à l'état de programmation des chemins optiques de connexion. Cette comparaison peut intervenir localement au niveau du contrôleur de noeud 96 ou de manière centralisée au niveau d'un appareil de gestion de réseau après transmission des mesures depuis le contrôleur de noeud 96. L'état de programmation des chemins optiques de connexion désigne ici des informations de référence définissant quels canaux de longueur d'onde doivent être présents sur chaque port de sortie du noeud de commutation 90 et quelle est la provenance de ces canaux. Ainsi, par comparaison de ces informations de référence avec l'identité des canaux détectés sur la voie de sortie et les signatures portées par chaque canal, des incohérences peuvent être détectées qui traduisent une erreur de configuration du réseau, par exemple la présence d'un canal non prévu, l'absence d'un canal prévu, la présence d'un canal prévu avec une provenance imprévue, etc. L'analyse canal par canal produite par le module d'analyse 98 peut prendre beaucoup plus de temps que l'analyse globale produite par le module d'analyse 93. Dans la mesure où une alerte précoce a pu être envoyée au gestionnaire du réseau, ce délai n'est pas critique car le module d'analyse 98 sert principalement à préciser ou confirmer la nature du problème détecté.

Par exemple, par mesure de précaution, un chemin optique de protection contournant la matrice de commutation 88 pourrait être activé dès l'avertissement fourni par le module de comparaison 94 en activant une matrice de commutation de secours (non représentée) du noeud 90.

En variante, le module d'analyse 98 peut fonctionner en continu parallèlement au module d'analyse 93, sans nécessiter de déclenchement spécifique. Toutefois, ce mode de réalisation accroît la consommation énergétique du dispositif de surveillance, et donc la dissipation thermique, ainsi que le vieillissement du filtre accordable le cas échéant.

Comme indiqué par la flèche 97, le contrôleur de noeud 96 est relié par des canaux de contrôle à un appareil de gestion de réseau et/ou aux contrôleurs de noeuds d'autres noeuds du réseau, afin de recevoir des messages de contrôles. Ces messages de contrôle incluent par exemple des instructions de commande pour reconfigurer localement la matrice de commutation 88, par exemple pour l'établissement de chemins optiques, à la destruction de chemins optiques ou à la modification de chemins optiques existants. Réciproquement, le contrôleur de noeud 96 possède un module de signalisation 97 pour émettre des messages de contrôle.

Dans un mode de réalisation particulier, le contrôleur de noeud 96 ayant reçu l'avertissement du module de comparaison 94 détermine si cette variation des signatures détectées correspond à une instruction de commande qui vient d'être exécutée. Dans l'affirmative, la variation détectée peut être traitée comme une confirmation de la bonne exécution de l'instruction de commande et donner lieu, par exemple, à l'émission d'un message de confirmation à destination d'un appareil de gestion de réseau. (Dans l'exemple des figures 9 et 10, ce cas correspond par exemple à l'exécution d'une instruction de reconfiguration de la matrice de commutation 88, causant la suppression du canal λ4 sur le port 86.) Il n'est pas nécessaire de déclencher le module d'analyse 98 dans ce cas, sauf éventuellement si une analyse canal par canal est nécessaire pour pouvoir confirmer l'exécution de l'instruction de reconfiguration. Inversement, dans la négative, la variation détectée peut être traitée comme une indication d'erreur précoce et donner lieu, par exemple, à l'émission d'un message d'alerte à destination d'un appareil de gestion de réseau ainsi qu'au déclenchement d'une analyse détaillée par le module d'analyse 98.

Afin de pouvoir distinguer les variations de signatures causées par le fonctionnement de la matrice de commutation 88 des variations de signatures causées par une variation des signaux optiques reçus par les ports d'entrée 84 et 85, il peut être avantageux d'ajouter un autre détecteur des variations de signatures multicanal, similaire aux modules 93 et 94, entre les ports d'entrée et la matrice de commutation.

En outre, bien que l'on ait décrit et représenté le dispositif de surveillance en relation avec une voie de sortie du noeud, ce dispositif peut être implanté de la même manière sur toute voie d'entrée ou toute voie de sortie du noeud.

Quelle que soit le type de la surveillance effectuée, une autre variante de réalisation consiste à utiliser un commutateur comprenant des entrées sélectionnables couplées respectivement à une ou plusieurs voies de sortie et à une ou plusieurs voies d'entrée de la matrice de commutation, et un module d'analyse mutualisé comprenant une entrée couplée à la sortie du commutateur et chargé d'analyser un signal optique venant sélectivement de l'une des voies couplées au commutateur.

Les différents dispositifs de surveillance décrits peuvent être implantés de manière indépendante les uns des autres ou bien de manière combinée. Dans ce cas, certains modules ou composants des différents dispositifs de surveillance peuvent être mis en commun ou intégrés, par exemple un module d'analyse.

L'usage du verbe « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

L'invention peut être réalisée avec des programmes d'ordinateur conçus spécifiquement pour faire remplir les fonctions énoncées par des matériels programmables ou avec des éléments dont la conception matérielle correspond spécifiquement aux fonctions énoncées, ou avec une combinaison de programmes et d'éléments matériels spécifiques. Plusieurs moyens ou unités ou modules peuvent être représentés par un même élément matériel.

Dans les revendications, tout chiffre de référence entre parenthèses ne saurait être interprété comme une limitation de la revendication.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de surveillance des chemins optiques de connexion, pour un réseau optique transparent, comprenant les étapes consistant à :
au niveau d'au moins un élément du réseau, marquer un signal optique transitant dans ledit élément du réseau d'une signature de point de transit associée de manière unique audit élément du réseau,
détecter les signatures de points de transit portées par un signal optique à multiplexage en longueurs d'onde transitant dans un élément du réseau (90), et rechercher un état anormal affectant ledit signal optique à multiplexage en longueurs d'onde à partir des signatures de points de transit détectées,
**caractérisé par** les étapes consistant, en réponse à la détection de l'état anormal affectant ledit signal optique à multiplexage en longueurs d'onde, à séparer un sous-ensemble de longueurs d'onde dudit signal optique à multiplexage en longueurs d'onde et rechercher une faute de connexion affectant ledit sous-ensemble de longueurs d'onde.

2. Procédé selon la revendication 1, **caractérisé par le fait que** les signatures de points de transit portées par ledit signal optique à multiplexage en longueurs d'onde sont détectées à plusieurs instant successifs, la recherche dudit état anormal incluant l'étape consistant à détecter une variation des signatures de points de transit détectées au cours du temps.

3. Procédé selon la revendication 2, **caractérisé par le fait que** ledit état anormal inclut une variation des signatures de points de transit décorrélée de la programmation des chemins optiques de connexion dans le réseau, la recherche dudit état anormal incluant l'étape consistant à rechercher dans la programmation des chemins optiques de connexion du réseau une instruction de reconfiguration correspondant à la variation détectée.

4. Procédé selon la revendication 1, **caractérisé par le fait que** la détection des signatures de points de transit est effectuée pour un signal optique guidé en direction de moyens de traitement aptes à marquer ledit signal optique d'au moins une signature de point de transit attribuée auxdits moyens de traitement, ledit état anormal incluant la présence, sur ledit signal optique en amont desdits moyens de traitement, d'une dite signature de point de transit attribuée auxdits moyens de traitement.

5. Procédé selon l'une des revendications 1 à 4, **caractérisé par le fait qu'**il comporte l'étape consistant à détecter les signatures de points de transit portées par ledit ou chaque sous-ensemble de longueurs d'onde séparé, la recherche de faute étant effectuée à partir des signatures de points de transit détectées sur ledit sous-ensemble de longueurs d'onde.

6. Procédé selon l'une des revendications 1 à 5, une signature de point de transit est marquée par sur-modulation d'amplitude du signal optique, la détection des signatures de points de transit incluant l'étape consistant à mesurer un spectre des sur-modulations d'amplitude portées par le signal optique.

7. Procédé selon l'une des revendications 1 à 6, comprenant l'étape consistant à :
en réponse à la détection de l'état anormal affectant ledit signal optique à multiplexage en longueurs d'onde, émettre un signal d'alerte à destination d'un système de gestion du réseau.

8. Dispositif de surveillance des chemins optiques de connexion, pour un réseau optique transparent comportant des moyens de traitement disposés au niveau d'au moins un élément du réseau et aptes à marquer un signal optique transitant dans ledit élément du réseau d'une signature de point de transit associée de manière unique audit élément du réseau, **caractérisé par le fait que** ledit dispositif comporte :
des moyens d'analyse multi-canal (93, 50) disposés au niveau d'un élément du réseau (90, 32) pour détecter les signatures de points de transit portées par un signal optique à multiplexage en longueurs d'onde transitant dans ledit élément du réseau, lesdits moyens d'analyse multi-canal étant aptes à rechercher un état anormal affectant ledit signal optique à multiplexage en longueurs d'onde à partir des signatures de points de transit détectées,
des moyens de séparation optique (66) pour séparer un sous-ensemble de longueurs d'onde dudit signal optique à multiplexage en longueurs d'onde, des moyens d'analyse de canal séparé (98, 96, 50, 55) aptes à rechercher une faute affectant ledit sous-ensemble de longueurs d'onde séparé.

9. Dispositif selon la revendication 8, **caractérisé en ce qu'**il comporte des moyens de déclenchement (96) aptes à déclencher lesdits moyens d'analyse de canal séparé (98) pour effectuer ladite recherche de faute en réponse à la détection de l'état anormal affectant ledit signal optique à multiplexage en longueurs d'onde.

10. Dispositif selon la revendication 8 ou 9, **caractérisé par le fait que** lesdits moyens d'analyse multi-canal comportent des moyens de comparaison temporelle (94) pour détecter une variation des signatures de points de transit détectées au cours du temps.

11. Dispositif selon la revendication 10, **caractérisé par le fait qu'**il comporte des moyens d'analyse d'instructions (96) aptes à rechercher dans la programmation des chemins optiques de connexion du réseau une instruction de reconfiguration correspondant à une variation des signatures de points de transit détectée par lesdits moyens de comparaison temporelle.

12. Dispositif selon la revendication 8 ou 9, **caractérisé par le fait que** lesdits moyens d'analyse multi-canal (50, 55) et lesdits moyens d'analyse de canal séparé (50, 55) sont disposés de manière à détecter des signatures sur un signal optique se propageant vers des moyens de traitement (46) aptes à marquer ledit signal optique d'au moins une signature de point de transit attribuée auxdits moyens de traitement, lesdits moyens d'analyse multi-canal et lesdits moyens d'analyse de canal séparé étant aptes à rechercher ladite au moins une signature de point de transit attribuée auxdits moyens de traitement.
